# EUROPEAN PATENT APPLICATION

(11) **EP 4 813 877 A1**
(43) Date of publication of application: **30.09.2026**
(21) Application number: 24895762.3
(22) Date of filing: 15.08.2024
(51) Int. Cl.: B65G 47/88

(54) **CONVEYING DEVICE AND BATTERY PRODUCTION LINE**

(30) Priority: 27.11.2023 CN 202311598053
(71) Applicant: Contemporary Amperex Technology Co., Limited, Ningde, Fujian 352100 (CN)
(72) Inventor: WU, Kai, Ningde, Fujian 352100 (CN); LIU, Fusheng, Ningde, Fujian 352100 (CN); ZUO, Wentao, Ningde, Fujian 352100 (CN); ZHANG, Shuming, Ningde, Fujian 352100 (CN); YU, Yongsheng, Ningde, Fujian 352100 (CN)
(74) Representative: Gong, Jinping
(86) International application number: PCT/CN2024/112374
(87) International publication number: WO 2025/112661

(57) **Abstract**

The present application relates to the field of battery technologies and provides a conveying apparatus (10) and a battery production line. The conveying apparatus (10) includes a conveying mechanism (100), a blocking mechanism (200), and a damping mechanism (300). The conveying mechanism (100) has a conveying zone (101), and the conveying mechanism (100) is configured to convey material in the conveying zone (101) along a transmission direction. The blocking mechanism (200) is configured to extend into the conveying zone (101) to block movement of the material along the transmission direction. The damping mechanism (300) is at least partially located in the conveying zone (101). In the transmission direction, a damping mechanism (300) is arranged at a distance from the blocking mechanism (200). The damping mechanism (300) is capable of moving relative to the conveying mechanism (100) under the drive of the material. The conveying apparatus (10) provided by the present application is used for conveying carrier cups, and the damping mechanism (300) is configured to provide resistance to the carrier cups to reduce the impact force of the carrier cups on the blocking mechanism (200), thereby improving the service life of the blocking mechanism (200).

## Description

### CROSS-REFERENCE TO RELATED APPLICATIONS

The present application claims priority to Chinese Patent Application No. 202311598053.3, filed on November 27, 2023 and entitled "CONVEYING APPARATUS AND BATTERY PRODUCTION LINE," which is incorporated herein by reference in its entirety.

### TECHNICAL FIELD

The present application relates to the field of battery technologies, and more specifically, to a conveying apparatus and a battery production line.

### BACKGROUND

In the battery production process, a plurality of production processes are involved, with different production devices used to implement various process flows. In many cases, conveying apparatuses are required to transfer battery cells. During the transfer of battery cells, the battery cells are typically placed in carrier cups, which provide a certain degree of protection to the battery cells during transportation.

When carrier cups are transported using flexible chain plates, a plurality of carrier cups are sequentially arranged on the flexible chain plate and move forward under the drive of the flexible chain plate. At positions where multiple flexible chain plates diverge or converge, it is necessary to control the movement of carrier cups on different flexible chain plates to prevent interference between carrier cups on different flexible chain plates. Generally, blocking and stopping mechanisms are provided on the flexible chain plates to control the advancement and stopping of carrier cups on different flexible chain plates. Since the flexible chain plates are always in motion while the carrier cups are blocked by the blocking and stopping mechanism, when a large number of carrier cups are on the flexible chain plate, the instantaneous impact load of the carrier cups on the blocking and stopping mechanisms becomes excessive, making the blocking and stopping mechanism prone to damage.

### SUMMARY

An objective of an embodiment of the present application is to provide a conveying apparatus aimed at addressing the technical problem in the prior art where the blocking and stopping mechanism is prone to damage due to excessive instantaneous impact loads.

To achieve the above objective, the technical solution adopted by the present application is as follows.

According to a first aspect, a conveying apparatus is provided, including:
a conveying mechanism having a conveying zone, the conveying mechanism configured to convey material in the conveying zone along a transmission direction;
a blocking mechanism configured to extend into the conveying zone to block movement of the material along the transmission direction; and
a damping mechanism, at least partially located in the conveying zone, where the damping mechanism is arranged at a distance from the blocking mechanism in the transmission direction, the damping mechanism is capable of moving relative to the conveying mechanism under the drive of the material, and the damping mechanism is configured to provide resistance to the material.

The conveying apparatus provided in an embodiment of the present application can be applied in a battery production line, where the conveying apparatus is configured to convey carrier cups, that is, the material conveyed in the conveying apparatus is carrier cups. The conveying mechanism is configured to convey the material in the conveying zone along the transmission direction. The blocking mechanism may extend into the conveying zone to block the carrier cups. Since the conveying apparatus is provided with a damping mechanism configured to provide resistance to the carrier cups, during movement of the carrier cups in the transmission direction and toward the blocking mechanism, the damping mechanism provides resistance to the carrier cups when the carrier cups pass through the damping mechanism, thereby reducing the impact force of a carrier cup on a preceding carrier cup and, consequently, reducing the impact force of the carrier cups on the blocking mechanism. This mitigates damage to the blocking mechanism to a certain extent and extends the service life of the blocking mechanism.

In a possible design, the damping mechanism includes a damping portion and a damping actuator, the damping actuator configured to drive the damping portion to move toward or away from the conveying zone.

In this configuration, the damping actuator may move the damping portion to a position away from the conveying zone, thereby allowing adjustment of whether resistance is provided to the carrier cups based on specific conveying requirements of the carrier cups.

In a possible design, the conveying apparatus further includes a first sensor, where the first sensor is located behind the damping portion in the transmission direction, arranged at a distance from the damping portion, and configured to detect whether material is present in the conveying zone opposite the first sensor; and under the condition that the first sensor detects that no material is present in the conveying zone opposite the first sensor, the damping actuator drives the damping portion to move away from the conveying zone.

In this configuration, when the first sensor detects that no carrier cups are present in the corresponding conveying zone, the damping actuator drives the damping portion away from the conveying zone. That is, when a small number of carrier cups are in front of the damping portion, the damping actuator may automatically move the damping portion to a position away from the conveying zone to reduce the resistance provided to the carrier cups, facilitating the transportation of the carrier cups.

In a possible design, the damping mechanism further includes a connecting base, where the connecting base includes a first plate and a second plate, the first plate is connected to the second plate at an angle, the first plate is connected to the damping actuator, the damping portion is movably mounted on the second plate, and the damping actuator is located within a space defined by the first plate and the second plate.

In this configuration, since the damping actuator is mounted within the space defined by the first plate and the second plate, the overall structure of the damping mechanism is more compact and occupies less space.

In a possible design, the damping mechanism further includes a damping mounting base, the damping mounting base is connected to the conveying mechanism, the damping actuator is connected to the damping mounting base, one of the damping mounting base and the second plate is provided with a first slide rail, the other is provided with a first slide block, and the first slide block is slidably mounted on the first slide rail.

In this configuration, the movement of the second plate driving the damping portion relative to the damping mounting base is more stable.

In a possible design, a plurality of damping mechanisms are provided, and the damping portions of the plurality of damping mechanisms are spaced apart in the transmission direction.

In this configuration, since a plurality of damping mechanisms are provided, the plurality of damping mechanisms can provide multiple instances of resistance to the carrier cups in different regions, further reducing the instantaneous impact force of the carrier cups on the blocking mechanism.

In a possible design, the damping mechanism further includes a base, a pressure member, an angular contact bearing set, and a rod, where an outer ring of the angular contact bearing set is connected to the base, an inner ring of the angular contact bearing set is connected to the rod, the pressure member is located on one axial side of the angular contact bearing set, the pressure member provides pressure to the angular contact bearing set, the damping portion is in transmission connection with the rod, the damping portion is capable of driving the rod to rotate, and the material is capable of pushing the damping portion to rotate.

In this configuration, when the material passes through the damping portion, the material needs to drive the damping portion to rotate to continue moving along the transmission direction. The damping portion is connected to the rod, and the rod is in transmission connection with the angular contact bearing set. Under the action of pressure from the pressure member, the angular contact bearing set must overcome this pressure during rotation, thereby achieving the effect of providing resistance to the material.

In a possible design, the pressure member includes an elastic member, the damping mechanism further includes an adjusting member, the elastic member being located between the adjusting member and the angular contact bearing set, and the adjusting member being capable of moving relative to the rod to change an amount of compression of the elastic member.

During the process of this configuration, the provision of the elastic member enables the magnitude of the pressure on the angular contact bearing set to be maintained over a long period of time.

In a possible design, the damping portion is provided with a through hole, the rod passes through the through hole, and the angular contact bearing set and the adjusting member are respectively located on opposite sides of the damping portion, where the damping mechanism further includes a connecting member, the connecting member is fixedly connected to the damping portion, the connecting member is in transmission connection with the rod, and the connecting member is capable of driving the rod to rotate.

In this configuration, the rod extends through the damping portion, facilitating rotation of the damping portion.

In a possible design, two ends of the connecting member are respectively in contact with the elastic member and the angular contact bearing set.

In this configuration, the elastic member applies pressure to the angular contact bearing set through the connecting member. Compared to the elastic member, the connecting member increases the contact area with the angular contact bearing set, which is more conducive to applying compressive stress to the angular contact bearing set.

In a possible design, the damping mechanism further includes a scale structure, the scale structure is provided with scale lines, one end of the scale structure is in contact with the adjusting member, the other end extends into the through hole, and the scale structure is capable of moving relative to the rod under the drive of the adjusting member.

In this configuration, the scale lines on the scale structure allow direct observation of the relative position of the adjusting member on the rod, thereby facilitating determination of the magnitude of the compressive stress applied to the angular contact bearing set, and facilitating determination of the magnitude of the resistance provided by the damping mechanism to the carrier cups.

In a possible design, the elastic member is a spring. The spring is sleeved on the rod, a portion of the spring is located within the through hole, the scale structure has an accommodating cavity, a portion of the spring is located within the accommodating cavity, and the scale structure is in contact with an end of the spring away from the angular contact bearing set.

In this configuration, the scale structure provides a certain degree of protection to the spring, and the relative positions of the scale structure, the spring, and the damping portion are more compact, facilitating a reduction in the space occupied by the damping mechanism.

In a possible design, the rod is provided with external threads, the adjusting member has a threaded hole engaging with the external threads, and the adjusting member is threadedly engaged with the rod through the threaded hole.

During the process of this configuration, the magnitude of the compressive stress applied to the angular contact bearing set may be adjusted by rotating the adjusting member, making the adjustment process convenient.

In a possible design, the conveying apparatus further includes a counting sensor, the counting sensor includes a detection end, the damping portion is provided with a triggering structure, the damping portion moves under the drive of the material to drive the triggering structure to trigger the detection end, and the counting sensor is capable of recording the number of times the detection end is triggered.

During the process of this configuration, the provision of the counting sensor can be used to detect the number of carrier cups passing through the damping portion, facilitating the calculation of the number of carrier cups passing through on the production line and enabling the transport of a predetermined number of carrier cups.

In a possible design, the second plate is provided with a liquid injection hole, the liquid injection hole being arranged opposite the first slide block.

In this configuration, a lubricant may be added between the first slide block and the first slide rail through the liquid injection hole to improve the smoothness of movement of the first slide block relative to the first slide rail.

In a possible design, the blocking mechanism includes a blocking member and a blocking actuator, the blocking actuator is configured to drive the blocking member to move to extend into the conveying zone, the blocking member includes a limiting end, where the limiting end has a first face and a second face that are arranged in the transmission direction, the first face and the second face are inclined relative to each other, and the distance between the first face and the second face gradually increases in a direction away from the conveying zone.

In this configuration, the size of the side of the blocking member close to the conveying zone is relatively small, making it easier to extend between two adjacent carrier cups.

In a possible design, the first face is located behind the second face in the transmission direction, and the first face is perpendicular to the transmission direction.

In this configuration, the contact area between the first face and the carrier cup is relatively larger, facilitating the blocking operation of the carrier cup.

In a possible design, the first face is mounted with a buffer structure.

In this configuration, the provision of the buffer structure can reduce the impact force between the carrier cup and the first face.

In a possible design, the first face is provided with an embedding groove, the buffer structure is cylindrical, and the buffer structure is mounted in the embedding groove with a portion of the buffer structure located outside the embedding groove.

In this configuration, a portion of the cylindrical buffer structure protrudes outside the embedding groove, allowing the buffer structure to contact the carrier cup before the first face, thereby reducing the probability of contact between the carrier cup and the first face and reducing the impact of the carrier cup on the first face.

In a possible design, a plurality of limiting ends are provided, and the plurality of limiting ends are spaced apart in a direction perpendicular to the transmission direction.

In this configuration, the plurality of limiting ends can contact different regions of a carrier cup, thereby improving the stability of blocking the carrier cup and preventing the carrier cup from tipping over.

In a possible design, the blocking mechanism further includes a blocking mounting base, one of the blocking mounting base and the blocking member is provided with a second slide rail, the other is provided with a second slide block, and the second slide block is slidably mounted on the second slide rail.

In this configuration, the movement of the blocking member relative to the blocking mounting base is more stable.

In a possible design, the blocking mechanism further includes a third plate and a fourth plate, the third plate is connected to the fourth plate at an inclined angle, the blocking actuator is mounted within a space defined by the third plate and the fourth plate, the blocking actuator is in transmission connection with the third plate, and the limiting end is connected to the fourth plate.

In this configuration, since the blocking actuator is mounted within the space defined by the third plate and the fourth plate, the overall structure of the blocking mechanism is more compact and occupies less space.

In a possible design, the conveying apparatus further includes a second sensor, the second sensor being located behind the blocking mechanism in the transmission direction, arranged at a distance from the blocking mechanism, and configured to detect whether material is present in the conveying zone opposite the second sensor.

In this configuration, since the second sensor is provided behind the blocking mechanism, it can detect whether material is present at a distance from the blocking mechanism, facilitating the determination of whether to block or allow the material to pass.

In a possible design, the conveying mechanism includes a frame, the conveying zone is located on the frame, and the blocking mechanism and the damping mechanism are respectively mounted on the frame.

In this configuration, the frame provides mounting space for the blocking mechanism and the damping mechanism, facilitating integral movement of the conveying apparatus.

In a possible design, the blocking mechanism and/or the damping mechanism is mounted on the side of the frame.

In this configuration, the mounting positions of the blocking mechanism and the damping mechanism do not intrude into the mounting space of the conveying zone.

In a possible design, the frame is provided with a first trough, and the blocking mechanism is mounted at the first trough;
and/or, the frame is provided with a second trough, and the damping mechanism is mounted at the second trough.

In this configuration, the mounting operation of the blocking mechanism and the damping mechanism is facilitated.

According to a second aspect, a battery production line is provided, including the conveying apparatus according to any one of the above technical solutions.

Since the battery production line includes the above conveying apparatus, it has at least all the advantages of the above conveying apparatus, which will not be repeated here.

In a possible design, a plurality of conveying apparatuses are provided, and the production line further includes a converging apparatus, the converging apparatus includes a converging zone, and the conveying zones of the plurality of conveying apparatuses are respectively in communication with the converging zone.

In this configuration, since the plurality of conveying apparatuses are each provided with a blocking mechanism and a damping mechanism, it is convenient to convey material to the converging apparatus through the plurality of conveying apparatuses.

### BRIEF DESCRIPTION OF DRAWINGS

To more clearly illustrate the technical solutions in the specific embodiments of the present application or the prior art, the following briefly introduces the accompanying drawings. In all the drawings, similar elements or parts are generally identified by similar reference numerals. The elements or parts in the drawings are not necessarily drawn to scale. It is apparent that the drawings described below are merely some embodiments of the present application, and those of ordinary skill in the art can obtain other drawings based on these drawings without creative effort.
FIG. 1 is a schematic structural diagram of a conveying apparatus according to an embodiment of the present application, viewed from one perspective;
FIG. 2 is an enlarged schematic diagram of portion D in FIG. 1;
FIG. 3 is a schematic structural diagram illustrating that a blocking mechanism of a conveying apparatus is in a second position, according to an embodiment of the present application;
FIG. 4 is an enlarged schematic diagram of portion E in FIG. 1;
FIG. 5 is a schematic structural diagram illustrating that a damping portion of a conveying apparatus is in a fourth position, according to an embodiment of the present application;
FIG. 6 is a schematic structural diagram of a damping mechanism of a conveying apparatus according to an embodiment of the present application;
FIG. 7 is a schematic cross-sectional structural diagram illustrating that a damping portion of a conveying apparatus is in a third position, according to an embodiment of the present application;
FIG. 8 is a schematic cross-sectional structural diagram illustrating that a damping portion of a conveying apparatus is in a fourth position, according to an embodiment of the present application;
FIG. 9 is a schematic cross-sectional diagram of a portion of a damping mechanism of a conveying apparatus according to an embodiment of the present application;
FIG. 10 is a schematic structural diagram of a blocking mechanism of a conveying apparatus according to an embodiment of the present application;
FIG. 11 is a schematic cross-sectional structural diagram illustrating that a blocking mechanism of a conveying apparatus is in a first position, according to an embodiment of the present application;
FIG. 12 is a schematic cross-sectional structural diagram illustrating that a blocking mechanism of a conveying apparatus is in a second position, according to an embodiment of the present application; and
FIG. 13 is a partial schematic structural diagram of a battery production line according to an embodiment of the present application.

The reference numerals involved in the above drawings are detailed as follows:
10. conveying apparatus; 11. material; 100. conveying mechanism; 101. conveying zone; 110. frame; 111. first trough; 112. second trough; 200. blocking mechanism; 201. blocking mounting base; 2011. first limiting portion; 202. second slide rail; 203. second slide block; 204. third plate; 205. fourth plate; 210. blocking actuator; 211. first-blocking-in-position sensor; 212. second-blocking-in-position sensor; 220. blocking member; 221. limiting end; 2211. first face; 2212. second face; 231. buffer structure; 232. embedding groove; 300. damping mechanism; 301. damping mounting base; 3011. second limiting portion; 302. first slide rail; 303. first slide block; 310. damping portion; 311. through hole; 312. triggering structure; 320. damping actuator; 321. first-damping-in-position sensor; 322. second-damping-in-position sensor; 330. connecting base; 331. first plate; 332. second plate; 3321. liquid injection hole; 340. base; 341. accommodating space; 350. pressure member; 351. elastic member; 360. angular contact bearing set; 370. rod; 380. adjusting member; 381. scale structure; 3811. scale line; 3812. accommodating cavity; 390. connecting member; 400. first sensor; 500. counting sensor; 510. detection end; and 600. second sensor.

### DESCRIPTION OF EMBODIMENTS

To make the technical problems to be addressed, technical solutions, and beneficial effects of the present application clearer, the following provides a further detailed description of the present application in conjunction with the accompanying drawings and embodiments. It should be understood that the specific embodiments described herein are merely used to explain the present application and are not intended to limit the present application.

In the description of the embodiments of the present application, the term "plurality" refers to two or more (including two).

In the description of the embodiments of the present application, unless otherwise explicitly specified and limited, technical terms such as "mount," "connect," "join," and "fix" should be understood in a broad sense. For example, it may refer to a fixed connection, a detachable connection, or an integral connection; it may refer to a mechanical connection or an electrical connection; it may refer to a direct connection or an indirect connection through an intermediate medium; it may refer to internal communication between two elements or the interaction relationship between two elements. For those of ordinary skill in the art, the specific meanings of the above terms in the embodiments of the present application can be understood based on specific circumstances.

It should be understood that the terms "length," "width," "up," "down," "front," "rear," "left," "right," "vertical," "horizontal," "top," "bottom," "inside," and "outside" indicating orientation or positional relationships are based on the orientation or positional relationships shown in the drawings, merely for the convenience of describing the present application and simplifying the description, and do not indicate or imply that the conveying apparatus or elements referred to must have a specific orientation, be constructed, or operate in a specific orientation, and thus cannot be construed as limiting the present application.

In addition, the terms "first" and "second" are used for descriptive purposes only and cannot be understood as indicating or implying relative importance or implicitly indicating the number of technical features indicated. Thus, features defined with "first" or "second" may explicitly or implicitly include one or more such features. In the description of the present application, "plurality" means two or more unless otherwise explicitly and specifically limited.

A battery production line is used for battery production, and the battery production line includes a plurality of production apparatuses or devices to implement different process flows in the battery production process. In some cases, after a production apparatus completes an operation for a previous process flow, the battery cells need to be transported to a production apparatus corresponding to a next process flow. A conveying apparatus can be used to transfer battery cells. During the transfer of battery cells, the battery cells are typically placed in carrier cups. Since the production apparatus can only process a limited number of carrier cups at a time, the number of carrier cups transferred to the production apparatus at one time is limited. In the conveying apparatus, the conveying chain plate is always in motion, and the carrier cups are blocked by a blocking and stopping mechanism to wait for a next transfer. At positions where multiple conveying chain plates diverge and converge, it is also necessary to use blocking and stopping mechanisms to block carrier cups on different conveying chain plates to avoid interference between carrier cups on different conveying chain plates.

However, since the conveying chain plates of the conveying apparatuses are in motion while the carrier cups are blocked by the blocking and stopping mechanism, when a large number of carrier cups are on the conveying chain plate, the instantaneous impact load of the carrier cups on the blocking and stopping mechanism becomes excessive, making the blocking and stopping mechanism prone to damage; and in addition, the compressive force between adjacent carrier cups is large, making it difficult to remove one or several carrier cups for inspection.

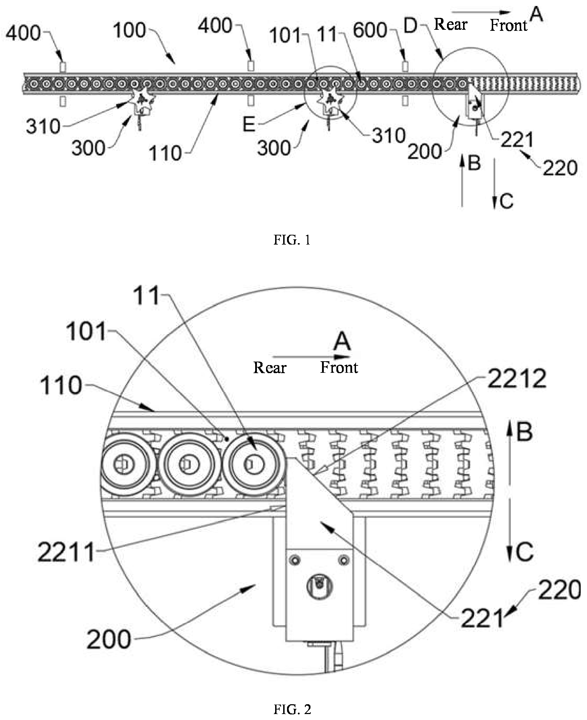

Based on the above considerations, to address the above issues, a conveying apparatus 10 is provided. The conveying apparatus 10 can be applied to a battery production line. As shown in FIG. 1, the conveying apparatus 10 includes a conveying mechanism 100, a blocking mechanism 200, and a damping mechanism 300. The conveying mechanism 100 is configured to transport carrier cups, the blocking mechanism 200 is configured to block the movement of carrier cups, and the damping mechanism 300 is configured to provide a certain resistance to the carrier cups, thereby reducing the force exerted by the carrier cups on the preceding carrier cups and on the blocking mechanism 200. This reduces the impact on the blocking mechanism 200 and the compressive force between adjacent carrier cups, protecting the blocking mechanism 200 while facilitating the removal of one or more carrier cups from the blocked carrier cups.

The conveying apparatus provided in embodiments of the present application is applicable to product production lines and is configured to convey material. The conveying apparatus provided in the embodiments of the present application is particularly suitable for conveying materials in batches where the spacing between adjacent pieces of material is relatively small or nonexistent. Batch conveying refers to a mode in which, after a batch of a plurality of materials is conveyed, the material conveyance needs to be stopped for a period of time before continuing to convey a next batch of a plurality of materials. By way of example, the conveying apparatus provided in the embodiments of the present application can be applied to a battery production line for conveying raw materials, semifinished products, or finished products in the battery manufacturing process. In a specific example, the conveying apparatus provided in the embodiments of the present application is suitable for a battery production line to convey battery cells, where the battery cells are accommodated in carrier cups in the conveyance process. Thus, the material on the conveying mechanism is carrier cups, which may contain battery cells.

The conveying apparatus provided in the embodiments of the present application is described in detail below.

As shown in FIG. 1, the conveying apparatus 10 includes a conveying mechanism 100, a blocking mechanism 200, and a damping mechanism 300. The conveying mechanism 100 has a conveying zone 101, and the conveying mechanism 100 is configured to convey material 11 in the conveying zone 101 along a transmission direction. The blocking mechanism 200 is configured to extend into the conveying zone 101 to block the movement of the material 11 along the transmission direction. The damping mechanism 300 is at least partially located in the conveying zone 101, where the damping portion 310 is arranged at a distance from the blocking mechanism 200 in the transmission direction, the damping mechanism 300 is capable of moving relative to the conveying mechanism 100 under the drive of the material 11, and the damping mechanism 300 is configured to provide resistance to the material 11.

The conveying apparatus 10 provided in the embodiments of the present application can be applied in a battery production line, where the conveying apparatus 10 is used for conveying carrier cups, that is, the material 11 conveyed in the conveying apparatus 10 is carrier cups. The conveying mechanism 100 is configured to convey the material 11 in the conveying zone 101 along the transmission direction. The conveying mechanism 100 has a conveying zone 101, which is a region for the movement of the material 11 on the conveying mechanism 100. The conveying mechanism 100 may be provided with a transmission structure, which may include a flexible transmission chain plate, a transmission chain, a transmission roller, a transmission tray, a transmission belt, or other structures. At least a portion of the transmission structure is the conveying zone 101. By way of example, the flexible transmission chain plate is an annular structure formed by interconnecting a plurality of chain plates, including at least an upper region and a lower region, with the upper region located above the lower region. The chain plates in the upper region move a certain distance along the transmission direction and then move downward to the lower region. The chain plates in the lower region move a certain distance in a direction opposite to the transmission direction and then move upward to the upper region, so that the chain plates can circulate within the conveying mechanism 100. The chain plates in the upper region are configured to drive the material 11 to move along the transmission direction, and the region where the chain plates in the upper region are located is the conveying zone 101.

The transmission direction is the movement direction of the material 11 within the conveying zone 101, with the forward direction being the movement direction of the material 11. That is, the material 11 moves from the rear to the front under the drive of the conveying mechanism 100. Assuming two pieces of material 11 are arranged front and back in the conveying zone 101, the two pieces of material 11 move along the transmission direction to point X, with the material 11 at the front reaching point X first, and the material 11 at the rear reaching point X later than the material 11 at the front. Alternatively, the material 11 that reaches point X first is the material 11 at the front, and the material 11 that reaches point X later is the material 11 at the rear. Point X is any point within the conveying zone 101.

The transmission direction may be a linear direction or a curved direction, or a part of the transmission direction is a straight direction and another part is a curved direction. When the transmission direction is linear, the material 11 moves along the transmission direction in a straight line; when the transmission direction is curved, the material 11 moves along the transmission direction in a curve; and when the transmission direction is partially linear and partially curved, the material 11 moves along the transmission direction linearly in a linear section and along a curve in a curved section.

The blocking mechanism 200 is configured to extend into the conveying zone 101 to block the material 11 in the conveying zone 101. The blocking mechanism 200 may be movable or fixed relative to the conveying zone 101. The blocking mechanism 200 moves relative to the conveying zone 101 to extend into or retract from the conveying zone 101. When extended into the conveying zone 101, the blocking mechanism 200 is fixed relative to the conveying zone 101 to block the material 11. When retracted from the conveying zone 101, the blocking mechanism 200 is fixed relative to the conveying zone 101 to allow the material 11 in the conveying zone 101 to continue moving forward along the conveying zone 101. By way of example, the blocking mechanism 200 can move in a direction toward or away from the conveying zone 101. When the blocking mechanism 200 moves toward the conveying zone 101, at least a portion of the blocking mechanism 200 moves into the conveying zone 101, thereby blocking the material 11 from continuing to move forward along the conveying zone 101. When the blocking mechanism 200 moves a certain distance away from the conveying zone 101, the blocking mechanism 200 moves outside the conveying zone 101, thereby having no blocking effect on the material 11, allowing the material 11 to continue moving forward along the conveying zone 101.

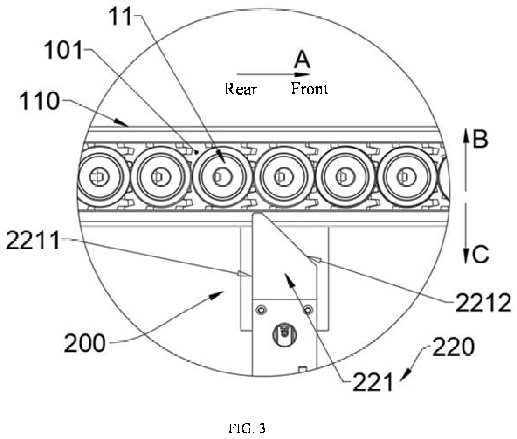

By way of example, the blocking mechanism 200 can move between a first position and a second position, as shown in FIG. 2. In FIG. 2, the blocking mechanism 200 is in the first position, and at least a portion of the blocking mechanism 200 moves to the central region of the conveying zone 101 in a direction perpendicular to the transmission direction. For ease of description, the direction perpendicular to the transmission direction is referred to as the width direction of the conveying zone 101. In FIG. 2, the end portion of the blocking mechanism 200 is located at the midpoint of the conveying zone 101 in the width direction, meaning that in the width direction of the conveying zone 101, the blocking mechanism 200 blocks at least half of the region of the conveying zone 101 corresponding to the blocking mechanism 200. In other configurations, when the blocking mechanism 200 is in the first position, the blocking mechanism 200 may completely block the region of the conveying zone 101 corresponding to the blocking mechanism 200 in the width direction. By way of example, the blocking mechanism 200 includes a blocking member 220 and a blocking actuator 210, the blocking actuator 210 being configured to drive the blocking member 220 to move toward or away from the conveying zone 101. When the blocking mechanism 200 is in the first position, the end portion of the blocking member 220 may extend to a side of the conveying zone 101 away from the blocking actuator 210, so as to completely block the region of the conveying zone 101 corresponding to the blocking member 220 in the width direction through the blocking member 220. As shown in FIG. 3, the blocking mechanism 200 is in the second position, and the blocking mechanism 200 does not extend into the region of the conveying zone 101 through which the material 11 passes. In FIG. 3, the material 11 is a carrier cup, and the width of the carrier cup is close to or equal to the width of the conveying zone 101, so the blocking mechanism 200 in the second position does not extend into the conveying zone 101 at all. If the width of the material 11 is less than the width of the conveying zone 101, in the conveying apparatus 10 transporting such material 11, the blocking mechanism 200 in the second position may partially extend into the conveying zone 101 but will not contact the material 11 being transported in the conveying zone 101.

In the drawings of the embodiments, the direction indicated by arrow A is the transmission direction, the direction indicated by arrow B is the direction toward the conveying zone 101, and the direction indicated by arrow C is the direction away from the conveying zone 101. The direction indicated by arrow A and the direction indicated by arrow B are directions at an angle relative to each other, with the direction indicated by arrow A and the direction indicated by arrow B not being parallel, and the directions indicated by arrow B and arrow C are opposite directions. By way of example, FIG. 1 is a top view of a battery production line, where the production line includes two conveying apparatuses 10, the transmission direction of one conveying apparatus 10 is the direction from left to right as shown in FIG. 1, and in this conveying apparatus 10, the movement direction of the blocking member 220 is perpendicular to the transmission direction.

The damping mechanism 300 is arranged at a distance from the blocking mechanism 200, meaning that the material 11 passing through the damping mechanism 300 moves a certain distance before reaching the blocking mechanism 200. When the material 11 passes through the damping mechanism 300, the material 11 drives the damping mechanism 300 to move relative to the conveying mechanism 100. That is, the damping mechanism 300 does not completely prevent the material 11 from moving, and the material 11 continues to move along the transmission direction to the blocking mechanism 200. However, since the damping mechanism 300 provides resistance to the material 11 during the movement of the damping mechanism 300 driven by the material 11, part of the force exerted by the material 11 is used to offset the resistance of the damping mechanism 300, thereby reducing the impact force of the material 11, which continues to move toward the blocking mechanism 200, on the blocking mechanism 200. When one material 11 is blocked by the blocking mechanism 200, each material 11 located behind this material 11 come into contact with the material 11 immediately in front of it. Due to the damping mechanism 300, part of the forward pushing force of the materials 11 at the rear is offset by the damping mechanism 300, thereby reducing the impact force of the materials 11 at the rear on the material 11 in front, that is, reducing the compressive force between adjacent pieces of material 11. This facilitates the removal of one or several of the plurality of materials 11 in contact with each other.

In one example, one or more damping mechanisms 300 may be provided behind the blocking mechanism 200, meaning that the material 11 moving along the transmission direction in the conveying zone 101 first passes through one or more damping mechanisms 300 before reaching the position of the blocking mechanism 200.

In a possible design, a plurality of damping mechanisms 300 are provided, and the damping portions 310 of the plurality of damping mechanisms 300 are spaced apart in the transmission direction. By way of example, two damping mechanisms 300 are provided in FIG. 1.

Increasing the number of damping mechanisms 300 may increase the resistance to the material 11. That is, assuming two damping mechanisms 300 are spaced apart in the transmission direction, the forward force of the material 11 decreases by a portion as the material 11 passes through the first damping mechanism 300, and then decreases by another portion as the material 11 passes through the second damping mechanism 300, further reducing the impact force of the material 11 on the blocking mechanism 200.

When a large number of carrier cups are in the conveying zone 101, and the blocking mechanism 200 blocks the carrier cups, some carrier cups that have not yet moved to the damping mechanism 300 adjacent to the blocking mechanism 200 come into contact with the carrier cup in front of it. To reduce the force of the carrier cups located relatively further back on the carrier cups in front, a plurality of damping mechanisms 300 are spaced apart in the transmission direction. This allows the plurality of damping mechanisms 300 to provide resistance to carrier cups relatively further from the blocking mechanism 200, and to provide multiple instances of resistance to carrier cups relatively closer to the blocking mechanism 200. The terms "relatively closer" and "relatively further" to the blocking mechanism 200 refer to the relative distance between the carrier cups and the blocking mechanism 200 when the blocking mechanism 200 blocks the carrier cups in the conveying zone 101. Among the plurality of damping mechanisms 300, the carrier cups in the conveying zone 101 corresponding to the region between the blocking mechanism 200 and the damping mechanism 300 closest to the blocking mechanism 200 are the carrier cups relatively closer to the blocking mechanism 200, while the other carrier cups are relatively further from the blocking mechanism 200.

In this configuration, since a plurality of damping mechanisms 300 are provided, the plurality of damping mechanisms 300 may provide multiple instances of resistance to the carrier cups in different regions along the transmission direction in the conveying zone 101, further reducing the instantaneous impact force of the carrier cups on the blocking mechanism 200.

In one configuration, the damping mechanism 300 can move relative to the conveying zone 101, allowing the damping mechanism 300 to extend into or retract from the conveying zone 101. When the damping mechanism 300 extends into the conveying zone 101, the damping mechanism 300 provides damping force to the material 11. When the damping mechanism 300 retracts from the conveying zone, the damping mechanism 300 stops providing resistance to the material 11.

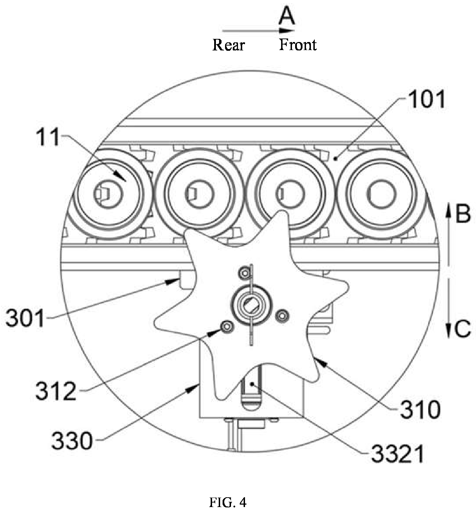

As shown in FIG. 4 to FIG. 6, in some embodiments, the damping mechanism 300 includes a damping portion 310 and a damping actuator 320, the damping actuator 320 being configured to drive the damping portion 310 to move toward or away from the conveying zone 101.

The damping actuator 320 is configured to drive the damping portion 310 to move in a direction toward or away from the conveying zone 101. When the damping actuator 320 moves the damping portion 310 toward the conveying zone 101, at least a portion of the damping portion 310 moves into the conveying zone 101, such that the material 11 must exert a certain force on the damping portion 310 before continuing to move forward along the conveying zone 101. When the damping actuator 320 moves the damping portion 310 a certain distance away from the conveying zone 101, the damping portion 310 moves outside the conveying zone 101, providing no resistance to the material 11, such that the material 11 can continue moving forward along the conveying zone 101 directly. The movement direction of the damping portion 310 driven by the damping actuator 320 may be inclined relative to the transmission direction. By way of example, the movement direction of the damping portion 310 driven by the damping actuator 320 is perpendicular to the transmission direction.

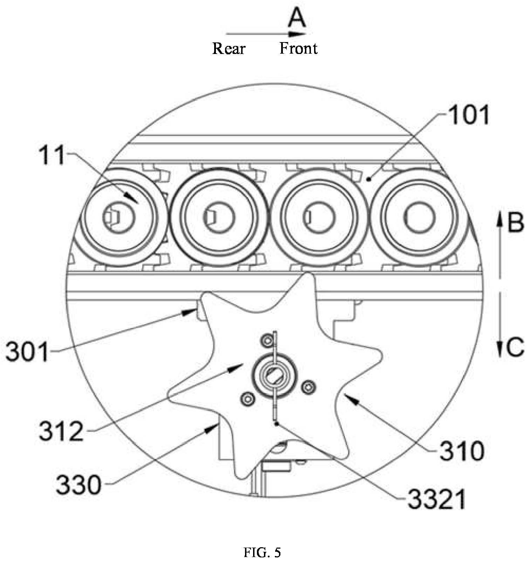

By way of example, the damping actuator 320 drives the damping portion 310 to move between a third position and a fourth position. In FIG. 4, the damping portion 310 is in the third position, with a portion of the structure of the damping portion 310 extending into the conveying zone 101, and the material 11 in the conveying zone 101 pushes the damping portion 310 to move and then continues to move along the transmission direction. As shown in FIG. 5, the damping portion 310 is in the fourth position, where after moving a certain distance from the third position along the direction of arrow C, the damping portion 310 moves to the fourth position, and the damping portion 310 does not contact the material 11 of the conveyor. Since the material 11 needs to push the damping portion 310 to move to continue moving forward along the transmission direction, when the number of materials 11 located behind the damping portion 310 is small and the resistance provided by the damping portion 310 is too large, to facilitate the smooth passage of the material 11 through the conveying zone 101 corresponding to the damping portion 310, the damping portion 310 can be moved out of the conveying zone 101. Since the number of materials 11 located behind the damping portion 310 is small, they will not exert a large impact force on the blocking member 220 at the front.

In this configuration, the damping actuator 320 can move the damping portion 310 to a position away from the conveying zone 101, allowing adjustment of whether resistance is provided to the carrier cups located behind the region corresponding to the damping portion 310 in the conveying zone 101 based on specific conveying requirements of the carrier cups.

The damping actuator 320 may be controlled by an operator. For example, upon observing that carrier cups are stagnating in the region corresponding to the damping portion 310, the operator activates the damping actuator 320 and moves the damping portion 310 to the fourth position through the damping actuator 320. When a large number of carrier cups are in the corresponding region behind the damping portion 310, the operator activates the damping actuator 320 and moves the damping portion 310 to the third position through the damping actuator 320 to provide resistance to the carrier cups through the damping portion 310.

As shown in FIG. 1, in a possible design, the conveying apparatus 10 further includes a first sensor 400, where the first sensor 400 is located behind the damping mechanism 300 in the transmission direction. When the damping mechanism 300 includes a damping portion 310, the first sensor 400 is located behind the damping portion 310, arranged at a distance from the damping portion 310, and configured to detect whether material 11 is present in the conveying zone 101 opposite the first sensor 400; and under the condition that the first sensor 400 detects that no material 11 is present in the conveying zone 101 opposite the first sensor 400, the damping actuator 320 drives the damping portion 310 to move away from the conveying zone 101.

Optionally, the spacing between the first sensor 400 and the damping portion 310 is the size of 4 to 8 pieces of material 11 (this size being the dimension of the material 11 in the transmission direction), meaning that 5 to 8 pieces of material 11 can be accommodated between the damping portion 310 and the first sensor 400. By way of example, as shown in FIG. 1, the spacing between the first sensor 400 and the damping portion 310 is the size of 5 pieces of material 11, meaning that when there are only five pieces of material 11 behind the damping portion 310, the first sensor 400 detects that no material 11 is present in the conveying zone 101 opposite it, and the damping actuator 320 drives the damping portion 310 to move outside the conveying zone 101. In this configuration, six pieces of material 11 can smoothly push the damping portion 310 to move without affecting movement in the transmission direction.

In this configuration, when the first sensor 400 detects that no carrier cups are present in the corresponding conveying zone 101, the damping actuator 320 drives the damping portion 310 to move away from the conveying zone 101. That is, when a relatively small number of carrier cups are in front of the damping portion 310, the damping actuator 320 may automatically move the damping portion 310 to a position away from the conveying zone 101 to reduce the resistance provided to the carrier cups, facilitating the transportation of the carrier cups. In this configuration, the distance between the damping portion 310 and the first sensor 400 may be calculated based on the magnitude of the resistance provided by the damping portion 310 to the material 11, or determined through experiments to find a minimum number of continuously conveyed carrier cups that can push the damping portion 310 to move, thereby determining the distance between the damping portion 310 and the first sensor 400. Since the first sensor 400 is provided, there is no need for an operator to observe and manually operate the damping actuator 320, enabling more intelligent automatic control. By way of example, the damping actuator 320 and the first sensor 400 may both be electrically connected to a same controller, and when the first sensor 400 detects that no carrier cups are present in the corresponding conveying zone 101, the first sensor 400 is triggered and sends a signal to the controller, which controls the damping actuator 320 to drive the damping portion 310 to move in a direction away from the conveying zone 101. The controller may be a standalone controller in the conveying apparatus 10 or a controller in the battery production line to which the conveying apparatus 10 is applied.

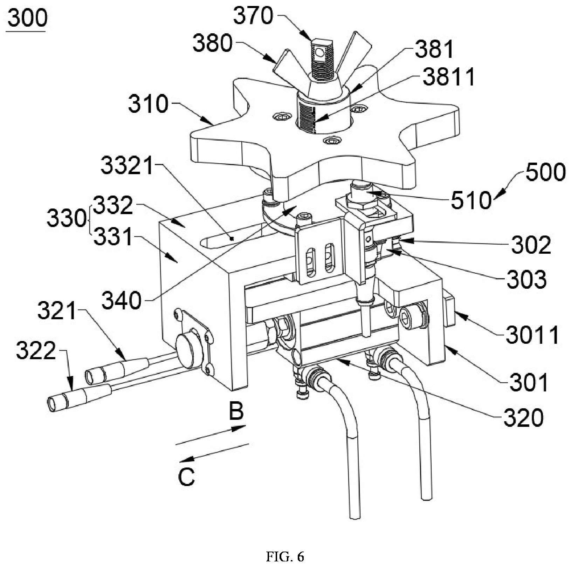

In some feasible embodiments, the damping actuator 320 may include any driving structure such as a motor, pneumatic cylinder, or hydraulic cylinder. By way of example, as shown in FIG. 6, the damping actuator 320 includes a pneumatic cylinder, the pneumatic cylinder including a cylinder body and a rod body, one end of the rod body being located within the cylinder body, and the other end being in transmission connection with the damping portion 310 to drive the damping portion 310 to move.

In some feasible embodiments, the pneumatic cylinder is connected to position sensors, with two position sensors: a first-damping-in-position sensor 321 and a second-damping-in-position sensor 322. The first-damping-in-position sensor 321 is triggered when the rod body drives the damping portion 310 to move to the third position, and the second-damping-in-position sensor 322 is triggered when the rod body drives the damping portion 310 to move to the fourth position. The first-damping-in-position sensor 321 and the second-damping-in-position sensor 322 can detect whether the damping portion 310 has moved to the correct position (third position or fourth position), facilitating closed-loop control of the pneumatic cylinder. That is, after the pneumatic cylinder is activated and drives the damping portion 310 to move away from the conveying zone 101, if the second-damping-in-position sensor 322 is triggered, it indicates that the damping portion 310 has moved to the fourth position, and the pneumatic cylinder stops driving the damping portion 310 to move further. Alternatively, after the pneumatic cylinder is activated and drives the damping portion 310 to move toward the conveying zone 101, if the first-damping-in-position sensor 321 is triggered, it indicates that the damping portion 310 has moved to the third position, and the pneumatic cylinder stops driving the damping portion 310 to move further. The first-damping-in-position sensor 321 and the second-damping-in-position sensor 322 may both be magnetic position sensors.

As shown in FIG. 6 to FIG. 8, in a possible design, the damping mechanism 300 further includes a connecting base 330, where the connecting base 330 includes a first plate 331 and a second plate 332, the first plate 331 is connected to the second plate 332 at an angle, the first plate 331 is connected to the damping actuator 320, the damping portion 310 is movably mounted on the second plate 332, and the damping actuator 320 is located within a space defined by the first plate 331 and the second plate 332.

The damping portion 310 is connected to the damping actuator 320 through the connecting base 330. Specifically, the damping actuator 320 includes a fixed portion and a driving portion, where the driving portion is capable of moving relative to the fixed portion, and the connecting base 330 is connected to the fixed portion of the damping actuator 320. By way of example, when the damping actuator 320 includes a pneumatic cylinder, the pneumatic cylinder includes a cylinder body and a rod body, the cylinder body being the fixed portion and the rod body being the driving portion. The first plate 331 of the connecting base 330 is connected to the end of the rod body away from the cylinder body.

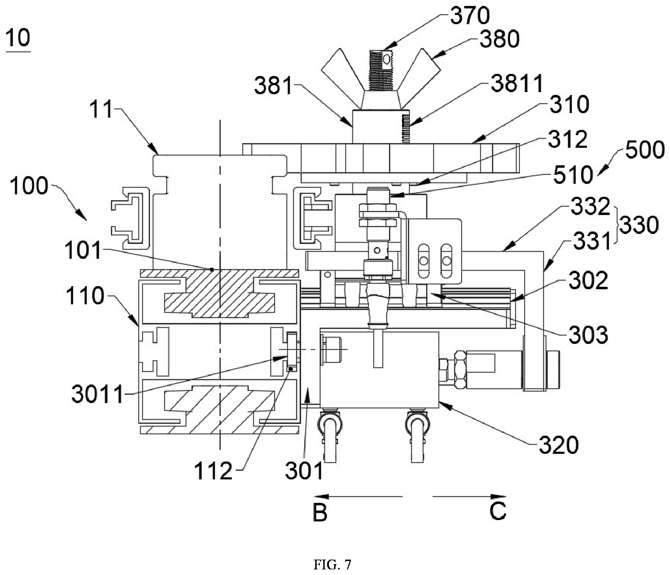

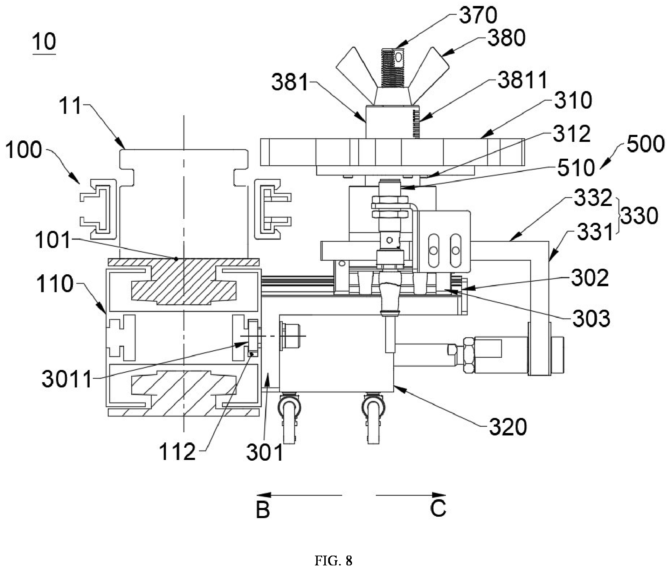

The first plate 331 and the second plate 332 may be perpendicularly connected. By way of example, as shown in FIG. 7 and FIG. 8, the first plate 331 is connected to the end of the second plate 332 away from the conveying zone 101, and the top end of the first plate 331 is connected to the second plate 332. That is, the space formed between the first plate 331 and the second plate 332 is located on a side of the first plate 331 close to the conveying zone 101 and below the second plate 332, with the damping portion 310 connected to the upper side of the second plate 332. With such an configuration, the damping actuator 320 is mounted below the damping portion 310, and the damping actuator 320 and the damping portion 310 are distributed in the height direction, thereby saving the mounting space of the damping mechanism 300 in the movement direction of the damping portion 310. When the movement direction of the damping portion 310 is the width direction of the conveying zone 101, this configuration imposes relatively low requirements on the space size in which the conveying mechanism 100 is located outside the conveying zone 101, facilitating the mounting and arrangement of the damping mechanism 300 on two sides of the conveying zone 101 in the width direction.

The damping portion 310 is configured to provide resistance to the material 11 without affecting the movement of the material 11 along the conveying direction. That is, after the material 11 moves to the position corresponding to the damping portion 310 along the conveying direction, the material 11 drives the damping portion 310 to move, and the damping portion 310 returns to its position to contact subsequent materials 11.

In some feasible embodiments, the damping portion 310 can move linearly relative to the conveying zone 101. The damping mechanism 300 includes a reset spring connected to the damping portion 310. The side of the damping portion 310 facing the material 11 is a guide surface, which is inclined relative to the conveying direction. As the material 11 moves along the conveying direction, the material 11 contacts the guide surface and pushes the damping portion 310 to move away from the conveying zone 101, causing the reset spring to store energy. When the material 11 separates from the guide surface, the reset spring drives the damping portion 310 to extend into the conveying zone 101 to contact the material 11 at the rear.

Alternatively, in other feasible embodiments, the damping portion 310 can rotate relative to the conveying zone 101. As shown in FIG. 6 and FIG. 7, the damping portion 310 includes a plurality of teeth, the plurality of teeth being spaced apart in a circumferential direction, with the region between adjacent teeth capable of accommodating one material 11. As shown in FIG. 7, when the damping portion 310 is in the third position, at least a portion of one tooth is located in the conveying zone 101 to contact the material 11. For ease of description, the region between two adjacent teeth is referred to as a buffer zone, and the material 11 is used to drive the damping portion 310 to rotate clockwise. At least three teeth are arranged in the counterclockwise direction: a first tooth, a second tooth, and a third tooth, with a first buffer zone between the first tooth and the second tooth, and a second buffer zone between the second tooth and the third tooth. When the material 11 contacts the first tooth and continues to move along the conveying direction, the material 11 drives the damping portion 310 to rotate and enters the first buffer zone behind the first tooth, allowing the material 11 behind this material 11 to enter the second buffer zone and contact the second tooth. In this configuration, since the material 11 drives the damping portion 310 to rotate, the damping portion 310 does not need to reset, continuously providing resistance to the material 11.

As shown in FIG. 6 to FIG. 9, in a possible design, the damping mechanism 300 further includes a base 340, a pressure member 350, an angular contact bearing set 360, and a rod 370. The outer ring of the angular contact bearing set 360 is connected to the base 340, the inner ring of the angular contact bearing set 360 is connected to the rod 370, the pressure member 350 is located on one axial side of the angular contact bearing set 360, the pressure member 350 provides pressure to the angular contact bearing set 360, the damping portion 310 is in transmission connection with the rod 370, the damping portion 310 is capable of driving the rod 370 to rotate, and the material 11 is capable of pushing the damping portion 310 to rotate.

The transmission connection between the damping portion 310 and the rod 370 may be a fixed connection or a relative limiting connection, meaning that the damping portion 310 and the rod 370 can rotate synchronously. In the axial direction of the rod 370, the damping portion 310 and the rod 370 may be relatively movable or relatively fixed. By way of example, one of the rod 370 and the damping portion 310 is provided with a rib arranged along the axial direction of the rod 370, and the other is provided with a groove arranged along the axial direction of the rod 370. When the damping portion 310 is in transmission connection with the rod 370, the rib is slidably fitted into the groove such that the damping portion 310 and the rod 370 are limited in the rotational direction through cooperation between the rib and the groove while being slidably fitted in the axial direction.

The angular contact bearing set 360 includes at least a pair of angular contact bearings arranged symmetrically in the axial direction. The angular contact bearing includes an inner ring and an outer ring, with the contact surface between the inner ring and the outer ring inclined relative to the angular contact bearing, meaning that the inner ring and the outer ring are arranged at an angle. An angular contact roller bearing may be selected as the angular contact bearing.

The inner ring of the angular contact bearing set 360 is connected to the rod 370, meaning that the inner rings of both angular contact bearings in the angular contact bearing set 360 are connected to the rod 370. The outer ring of the angular contact bearing set 360 is connected to the base 340, meaning that the outer rings of both angular contact bearings in the angular contact bearing set 360 are connected to the base 340. The connection between the inner ring of the angular contact bearing and the rod 370 refers to a relative limiting connection between the inner ring of the angular contact bearing and the rod 370 in the rotational direction. This allows the inner ring of the angular contact bearing and the rod 370 to rotate synchronously around the axis of the angular contact bearing. In the axial direction of the angular contact bearing, the connection between the inner ring of the angular contact bearing and the rod 370 may be a relative limiting connection or a fixed connection. By way of example, the connection between the inner ring of the angular contact bearing and the rod 370 may be connected by a spline connection or welding. The connection of the outer ring of the angular contact bearing to the base 340 specifically refers to a relative limiting connection between the outer ring of the angular contact bearing and the base 340 in the rotational direction. This allows the outer ring and the base 340 to rotate synchronously around the axis of the angular contact bearing. In the axial direction of the angular contact bearing, the connection between the outer ring and the base 340 may be a relative limiting connection, or a fixed connection. By way of example, the outer ring and the base 340 may be connected by a spline connection.

The pressure member 350 provides pressure along the axial direction to the angular contact bearing set 360, increasing the pressure between the inner ring and the outer ring of the angular contact bearing set 360, thereby increasing the resistance when the inner ring rotates relative to the outer ring.

The pressure member 350 may apply a preloading force during mounting to provide an axial pressure to the angular contact bearing set 360.

Alternatively, in some embodiments, the pressure member 350 provides pressure to the angular contact bearing set 360 through an elastic member 351. In a possible design, the pressure member 350 includes an elastic member 351, and the damping mechanism 300 further includes an adjusting member 380, where the elastic member 351 is located between the adjusting member 380 and the angular contact bearing set 360, and the adjusting member 380 is capable of moving relative to the rod 370 to change an amount of compression of the elastic member 351.

The adjusting member 380 is movable relative to the rod 370 and can be fixed at a plurality of different positions to maintain the amount of compression of the elastic member 351 at a plurality of different magnitudes, thereby providing different pressure values to the angular contact bearing set 360, such that the damping portion 310 can provide different resistance values to the material 11.

In this configuration, the magnitude of the resistance provided by the damping portion 310 to the material 11 may be adjusted based on factors such as the weight and number of materials 11, making it adaptable to various conveying apparatuses 10 for different materials 11.

By way of example, when the material 11 is relatively light, a relatively small resistance provided to the material 11 is sufficient to meet the demand, such that the adjusting member 380 can be moved and fixed to a position where the amount of compression of the elastic member 351 is relatively small, resulting in a relatively small pressure provided by the elastic member 351 to the angular contact bearing set 360. This reduces the resistance that the inner ring needs to overcome when rotating relative to the outer ring in the angular contact bearing set 360, meaning that the damping portion 310 provides a relatively small resistance to the material 11, and the material 11 requires a relatively small force to push the damping portion 310 and continue moving along the conveying direction. When the material 11 is relatively heavy, a relatively large resistance provided to the material 11 is sufficient to meet the demand, such that the adjusting member 380 can be moved and fixed to another position where the amount of compression of the elastic member 351 is relatively large, resulting in a relatively large pressure provided by the elastic member 351 to the angular contact bearing set 360. This increases the resistance that the inner ring needs to overcome when rotating relative to the outer ring in the angular contact bearing set 360, meaning that the damping portion 310 provides a relatively large resistance to the material 11, and the material 11 requires a relatively large force to push the damping portion 310 and continue moving along the conveying direction.

Since the elastic member 351 is located between the adjusting member 380 and the angular contact bearing set 360, moving the adjusting member 380 toward the angular contact bearing set 360 increases the amount of compression of the elastic member 351, while moving the adjusting member 380 away from the angular contact bearing set 360 decreases the amount of compression of the elastic member 351.

In a possible design, the damping portion 310 is provided with a through hole 311, the rod 370 passes through the through hole 311, the angular contact bearing set 360 and the adjusting member 380 are respectively located on opposite sides of the damping portion 310. The rod 370 may be in transmission connection with the inner wall of the through hole 311, thereby achieving a transmission connection between the damping portion 310 and the rod 370. Alternatively, the damping mechanism 300 further includes a connecting member 390, and the connecting member 390 is fixedly connected to the damping portion 310. The connecting member 390 is in transmission connection with the rod 370 and is capable of driving the rod 370 to rotate. In this configuration, the connection between the connecting member 390 and the damping portion 310 is located outside the through hole 311, and the connection operation is performed outside the through hole 311, providing a large operating space and facilitating mounting.

The transmission connection between the connecting member 390 and the rod 370 is a relative limiting connection, meaning that the connecting member 390 and the rod 370 can rotate synchronously, and in the axial direction of the rod 370, the connecting member 390 and the rod 370 can move relative to each other. By way of example, one of the rod 370 and the connecting member 390 is provided with a rib arranged along the axial direction of the rod 370, and the other is provided with a groove arranged along the axial direction of the rod 370. When the connecting member 390 is in transmission connection with the rod 370, the rib is slidably fitted into the groove such that the connecting member 390 and the rod 370 are limited in the rotational direction through the cooperation between the rib and the groove while being slidably fitted in the axial direction.

The rod 370 is passed through the damping portion 310, facilitating the rotation of the damping portion 310. The angular contact bearing set 360 and the adjusting member 380 are respectively located on opposite sides of the through hole 311, meaning that the angular contact bearing set 360 and the adjusting member 380 are respectively located on opposite sides of the damping portion 310. By way of example, the angular contact bearing set 360 is located below the damping portion 310, and the adjusting member 380 is located above the damping portion 310. The angular contact bearing set 360 is located below the damping portion 310, facilitating the mounting and arrangement of the angular contact bearing set 360, thereby lowering the center of gravity of the damping mechanism 300 and enhancing connection stability. The adjusting member 380 is located above the damping portion 310, facilitating adjustment operations.

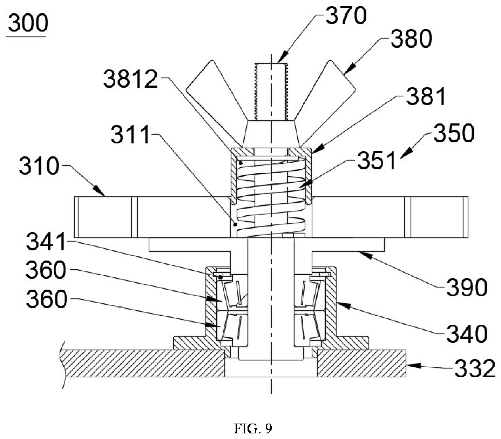

As shown in FIG. 9, in a possible design, two ends of the connecting member 390 are respectively in contact with the elastic member 351 and the angular contact bearing set 360. That is, the elastic force of the elastic member 351 is transmitted to the angular contact bearing set 360 through the connecting member 390, thereby providing pressure to the angular contact bearing set 360. Compared to the elastic member 351, the connecting member 390 increases the contact area with the angular contact bearing set 360, which is more conducive to applying relatively more uniform compressive stress to the angular contact bearing set 360.

By way of example, in the vertical direction, the top end of the connecting member 390 is in contact with the elastic member 351, and the bottom end of the connecting member 390 is in contact with the top surface of the angular contact bearing set 360, with the top end of the connecting member 390 connected to the damping portion 310. The area of the top surface of the connecting member 390 is larger than the area of its bottom surface. The larger top surface area of the connecting member 390 allows simultaneous contact with the elastic member 351 and the damping portion 310, increasing the contact area with the damping portion 310 and improving the connection strength with the damping portion 310. The area of the bottom surface of the connecting member 390 match the area and shape of the top surface of the angular contact bearing set 360 to increase the contact area with the top surface of the angular contact bearing set 360. Specifically, the bottom surface of the connecting member 390 is in contact with the top surface of the inner ring of the angular contact bearing in the angular contact bearing set 360 that is close to the connecting member 390. A limiting body is provided in the region of the rod 370 on a side of the angular contact bearing set 360 away from the connecting member 390, and the limiting body is in contact with the bottom surface of the inner ring of an angular contact bearing in the angular contact bearing set 360 away from the connecting member 390. The connecting member 390 and the limiting body perform limiting fixation of the angular contact bearing set 360 and the rod 370.

As shown in FIG. 6 to FIG. 9, in a possible design, the damping mechanism 300 further includes a scale structure 381. The scale structure 381 is provided with scale lines 3811, one end of the scale structure 381 is in contact with the adjusting member 380, the other end extends into the through hole 311, and the scale structure 381 is capable of moving relative to the rod 370 under the drive of the adjusting member 380.

When the adjusting member 380 is at different positions on the rod 370, the amount of compression of the elastic member 351 is different, and thus the compressive stresses applied on the angular contact bearing set 360 is different, resulting in different resistances provided by the damping portion 310 to the material 11. The position of the adjusting member 380 on the rod 370 has a positive correlation with the resistance provided by the damping portion 310 to the material 11. Thus, changing the position of the adjusting member 380 on the rod 370 can change the resistance provided by the damping portion 310 to the material 11. Therefore, the adjusting member 380 drives the scale structure 381 to move, such that the scale lines 3811 on the scale structure 381 reflect the pressure value applied by the pressure member 350 to the angular contact bearing set 360 or directly reflect the resistance value provided by the damping portion 310. Directly observation of the relative position of the adjusting member 380 on the rod 370 by means of the scale lines 3811 facilitates determination of the magnitude of the compressive stress applied to the angular contact bearing set 360, and facilitates determination of the magnitude of the resistance provided by the damping mechanism 300 to the carrier cups.

The scale lines 3811 may indicate pressure values or resistance values.

Since one end of the scale structure 381 extends into the through hole 311, the length of the portion of the scale lines 3811 outside the through hole 311 changes with the position of the adjusting member 380, and the scale line 3811 corresponding to the edge of the through hole 311 also changes with the position of the adjusting member 380. The scale line 3811 that is exposed outside the through hole 311 and closest to the through hole 311 can be used as the reference scale line 3811, meaning that the value corresponding to this scale line 3811 represents the current reading.

The elastic member 351 may be a leaf spring structure, a disc spring, a helical spring, an elastic block-shaped structure (for example, a rubber column), or the like.

In a possible design, the elastic member 351 is a spring. The spring is sleeved on the rod 370, a portion of the spring is located within the through hole 311, the scale structure 381 has an accommodating cavity 3812, a portion of the spring is located within the accommodating cavity 3812, and the scale structure 381 is in contact with an end of the spring away from the angular contact bearing set 360.

Since the damping portion 310 is connected to the rod 370, and the damping portion 310 is provided with a through hole 311, using a spring occupies relatively less space, and the spring may specifically be a helical spring.

The scale structure 381 has an accommodating cavity 3812, and the scale structure 381 may be a cylindrical cover structure. The accommodating cavity 3812 of the scale structure 381 communicates with the through hole 311, the scale structure 381 covers the top of the through hole 311, and the connecting member 390 covers the bottom of the through hole 311, thereby enclosing the spring within the through hole 311 and the accommodating cavity 3812.

In this configuration, the scale structure 381 provides a certain degree of protection to the spring, and the relative positions of the scale structure 381, the spring, and the damping portion 310 are more compact, facilitating a reduction in the space occupied by the damping mechanism 300.

The adjusting member 380 can move relative to the rod 370 and fixed at a plurality of positions through various configurations. By way of example, the rod 370 is provided with a plurality of first through holes spaced apart in the axial direction, the adjusting member 380 is provided with at least one second through hole, and the damping mechanism 300 further includes a pin. The pin passes through the second through hole and extends into one of the first through holes, thereby fixing the adjusting member 380 at one position on the rod 370. When the pin passes through the second through hole and extends into another first through hole, the adjusting member 380 can be fixed at another position on the rod 370.

In another feasible embodiment, the rod 370 and the adjusting member 380 are connected by a threaded connection. In a possible design, the rod 370 is provided with external threads, the adjusting member 380 has a threaded hole engaging with the external threads, and the adjusting member 380 is threadedly engaged with the rod 370 through the threaded hole. In this configuration, rotating the adjusting member 380 allows the adjusting member 380 to be moved and fixed at any position in the region of the rod 370 with the external threads. With such an configuration, the compressive stress applied to the angular contact bearing set 360 can be adjusted by rotating the adjusting member 380, making the adjustment process convenient.

In a possible design, the conveying apparatus 10 further includes a counting sensor 500. The counting sensor 500 includes a detection end 510, the damping portion 310 is provided with a triggering structure 312, the damping portion 310 moves under the drive of the material 11 to drive the triggering structure 312 to trigger the detection end 510, and the counting sensor 500 is capable of recording the number of times the detection end 510 is triggered.

When the damping portion 310 moves linearly relative to the conveying zone 101 under the action of the material 11, a single triggering structure 312 is provided on the damping portion 310. After the material 11 drives the damping portion 310 to move, the triggering structure 312 triggers the detection end 510, and the counting sensor 500 records an increment of one in the number of times the detection end 510 is triggered.

When the damping portion 310 rotates relative to the conveying zone 101 under the action of the material 11, and the damping portion 310 includes a plurality of teeth, there is a buffer zone between adjacent teeth, with one triggering structure 312 corresponding to each buffer zone. One detection end 510 is provided. After the damping portion 310 rotates, the triggering structure 312 corresponding to one buffer zone triggers the detection end 510, and the counting sensor 500 records an increment of one in the number of times the detection end 510 is triggered. After the damping portion 310 continues to rotate, the triggering structure 312 corresponding to a next buffer zone triggers the detection end 510, and the counting sensor 500 records an increment of one in the number of times the detection end 510 is triggered.

By way of example, the detection end 510 may be a proximity switch, and the triggering structure 312 may be a screw, with the detection end 510 provided below the damping portion 310, and the screw protruding from the lower surface of the damping portion 310. The provision of the screw facilitates connection with the damping portion 310 with a low cost.

In one configuration, the damping portion 310 and the connecting member 390 are connected by a screw. The end portion of the screw passes through the damping portion 310 and the connecting member 390 and protrudes below the connecting member 390, and the end portion of the screw serves as the triggering structure 312. With such an configuration, the screw serves both to connect the connecting member 390 and the damping portion 310 and to trigger the counting sensor 500.

The counting sensor 500 is provided and configured to detect the number of carrier cups passing through the damping portion 310, facilitating the counting of the number of carrier cups passing through the production line and enabling the transport of a predetermined number of carrier cups. For example, when a next device of the conveying apparatus 10 in the battery production line requires a supply of ten carrier cups at a time, the blocking member 220 moves out of the conveying zone 101 to convey carrier cups to the next device of the conveying apparatus 10. Since a plurality of carrier cups in the conveying zone 101 are in contact with each other front and back, when one carrier cup moves out of the conveying apparatus 10, another carrier cup simultaneously passes through the damping portion 310. That is, the number of carrier cups that have moved out of the conveying apparatus 10 can be determined by counting the number of carrier cups passing through the damping portion 310, facilitating the determination of whether a predetermined number (for example, ten) of carrier cups have moved out of the conveying apparatus 10.

The counting sensor 500 and the blocking actuator 210 may be electrically connected to a same controller. The controller determines, based on the count of the counting sensor 500, whether to control the blocking actuator 210 to start, so as to allow the blocking actuator 210 to drive the blocking member 220 to move away from the conveying zone 101. The controller may be a standalone controller in the conveying apparatus 10, with information input to the controller to inform it of the predetermined number of carrier cups to be transported. Alternatively, the controller may be a controller in the battery production line, electrically connected to other devices in the battery production line to determine comprehensively, based on data provided by other devices, whether to control the blocking actuator 210 to start.

In a possible design, the damping mechanism 300 further includes a damping mounting base 301. The damping mounting base 301 is connected to the conveying mechanism 100, the damping actuator 320 is connected to the damping mounting base 301, one of the damping mounting base 301 or the second plate 332 is provided with a first slide rail 302, the other is provided with a first slide block 303, and the first slide block 303 is slidably mounted on the first slide rail 302.

Since the second plate 332 and the damping mounting base 301 are slidably connected through the cooperation between the first slide block 303 and the first slide rail 302, the movement of the second plate 332 driving the damping portion 310 relative to the damping mounting base 301 is more stable.

As shown in FIG. 7 and FIG. 8, by example of example, the first slide rail 302 is mounted on the damping mounting base 301, and the first slide block 303 is mounted on the second plate 332. Since the weight of the first slide block 303 is smaller than that of the first slide rail 302, the first slide rail 302 does not need to move, and the first slide block 303 is driven to move during the movement of the second plate 332 Therefore, a driving force required for the damping actuator 320 to drive the damping portion 310 to move is reduced.

In a possible design, the second plate 332 is provided with a liquid injection hole 3321, the liquid injection hole 3321 being arranged opposite the first slide block 303. The liquid injection hole 3321 is a through hole penetrating the second plate 332 in the thickness direction of the second plate 332. By way of example, the liquid injection hole 3321 is an elongated hole, with the length direction of the elongated hole being the extension direction of the first slide rail 302 or the movement direction of the first slide block 303.

In this configuration, a lubricant may be added between the first slide block 303 and the first slide rail 302 through the liquid injection hole 3321 to improve the smoothness of movement of the first slide block 303 relative to the first slide rail 302. The lubricant may be lubricating grease, lubricating oil, or the like.

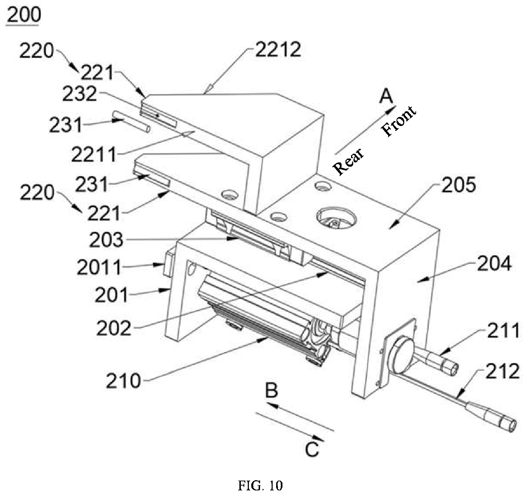

As shown in FIG. 2 and FIG. 10, in a possible design, the blocking mechanism 200 includes a blocking actuator 210 and a blocking member 220, the blocking actuator 210 is configured to drive the blocking member 220 to move toward or away from the conveying zone 101, and the blocking member 220 includes a limiting end 221, where the limiting end 221 has a first face 2211 and a second face 2212 that are arranged in the transmission direction, the first face 2211 and the second face 2212 are inclined relative to each other, and the distance between the first face 2211 and the second face 2212 gradually increases in a direction away from the conveying zone 101.

The blocking actuator 210 drives the blocking member 220 to move so as to extend into or move away from the conveying zone 101. Specifically, the blocking actuator 210 drives the limiting end 221 of the blocking member 220 to move so as to extend into or move away from the conveying zone 101. The limiting end 221 may have at least a portion of its structure extend into the conveying zone 101 under the drive of the blocking actuator 210 to limit the movement of the material 11 in the conveying zone 101. By way of example, the blocking actuator 210 may move the blocking member 220 at least between a first position and a second position, the first position being located within the conveying zone 101, and the second position being located outside the conveying zone 101. As shown in FIG. 2, the blocking member 220 is in the first position, with at least a portion of the blocking member 220 moving to the central region of the conveying zone 101 in a direction perpendicular to the transmission direction. For ease of description, the direction perpendicular to the transmission direction is referred to as the width direction of the conveying zone 101. In FIG. 2, the end portion of the blocking member 220 is located at the midpoint of the conveying zone 101 in the width direction, meaning that in the width direction of the conveying zone 101, the blocking member 220 blocks at least half of the region of the conveying zone 101 corresponding to the blocking member 220. In other configurations, when the blocking member 220 is in the first position, the end portion of the blocking member 220 may extend to a side of the conveying zone 101 away from the blocking actuator 210, so as to completely block the region of the conveying zone 101 corresponding to the blocking member 220 in the width direction through the blocking member 220. As shown in FIG. 3, the blocking member 220 is in the second position, and the blocking member 220 does not extend into the region of the conveying zone 101 through which the material 11 passes. In FIG. 3, the material 11 is a carrier cup, and the width of the carrier cup is close to or equal to the width of the conveying zone 101, so the blocking member 220 in the second position does not extend into the conveying zone 101 at all. If the width of the material 11 is less than the width of the conveying zone 101, in the conveying apparatus 10 transporting such material 11, the blocking member 220 in the second position may partially extend into the conveying zone 101 but will not contact the material 11 being transported in the conveying zone 101.

In the embodiments of the present application, the material 11 in the conveying zone 101 moves forward along the transmission direction. When at least a portion of the limiting end 221 extends into the conveying zone 101, under the limiting action of the limiting end 221, the material 11 is blocked behind the limiting end 221, preventing the remaining material 11 from continuing to move forward along the transmission direction. The first face 2211 and the second face 2212 are inclined relative to each other, specifically meaning that the first face 2211 and the second face 2212 form an angle less than or greater than 90 degrees. In the transmission direction, the distance between the first face 2211 and the second face 2212 gradually increases in a direction away from the conveying zone 101, meaning that in the transmission direction, the dimension of the limiting end 221 gradually increases in a direction away from the conveying zone 101. Thus, in this configuration, in the transmission direction, the dimension of the end of the limiting end 221 close to the conveying zone 101 is smaller than the dimension of the end of the limiting end 221 away from the conveying zone 101, facilitating smoother extension of the limiting end 221 into the gap between two adjacent pieces of material 11 in the conveying zone 101, thereby to some extent preventing the limiting end 221 of the blocking member 220 from pressing against the material 11 in the direction toward the conveying zone 101 when the blocking member 220 moves toward the conveying zone 101. In other words, in this configuration, the dimension of the side of the blocking member 220 close to the conveying zone 101 is relatively small, making it easier to extend between two adjacent carrier cups.

In some embodiments, both the first face 2211 and the second face 2212 may be inclined relative to the transmission direction. By way of example, the conveying mechanism 100 has a first wall and a second wall spaced apart, the conveying zone 101 is located between the first wall and the second wall, the first wall and the second wall are both arranged parallel to the transmission direction, and the first wall is further from the blocking mechanism 200 than the second wall. Both the first face 2211 and the second face 2212 are inclined relative to the first wall or the second wall, the distance between the first face 2211 and the first wall gradually decreases along the transmission direction, and the distance between the second face 2212 and the first wall gradually increases along the transmission direction.

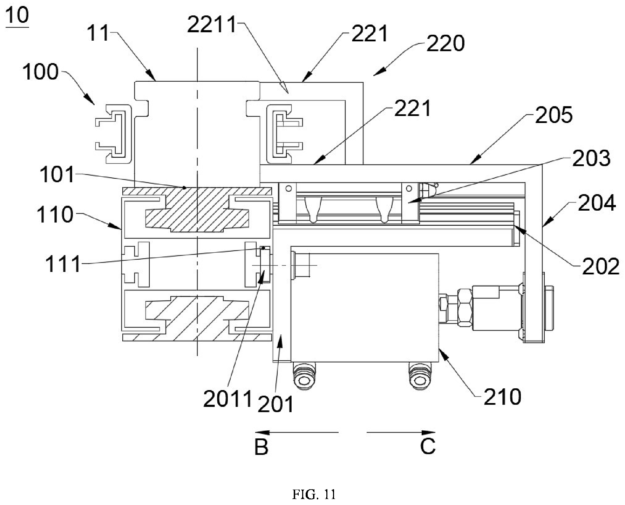

In a possible design, the first face 2211 is located behind the second face 2212 in the transmission direction, and the first face 2211 is perpendicular to the transmission direction. When at least a portion of the limiting end 221 extends into the conveying zone 101, as shown in FIG. 2 and FIG. 11, all materials 11 behind the limiting end 221 are blocked behind the limiting end 221, and the first face 2211 is subjected to the compressive force of the material 11 along the transmission direction. In this configuration, since the first face 2211 is perpendicular to the transmission direction, the reaction force exerted by the first face 2211 on the material 11 is directly opposite to the transmission direction, enhancing the limiting effect of the limiting end 221 on the material 11. Additionally, since the first face 2211 is perpendicular to the transmission direction, the force exerted by the material 11 on the first face 2211 is perpendicular to the first face 2211, improving the support effect of the limiting end 221 and to some extent preventing the limiting end 221 from breaking.

In a possible design, as shown in FIG. 10, the first face 2211 is mounted with a buffer structure 231. The buffer structure 231 serves to cushion the material 11, and the buffer structure 231 may specifically be made of a flexible material, such as polyurethane, polyether, or polyurethane polyether. The buffer structure 231 may be columnar, block-shaped, plate-shaped, or other irregular shapes. In this configuration, when at least a portion of the limiting end 221 extends into the conveying zone 101, the buffer structure 231 serves to cushion the movement of the material 11 behind the limiting end 221, reducing the impact force on the material 11, thereby providing better protection to the material 11 to some extent.

In a possible design, as shown in FIG. 10, the first face 2211 is provided with an embedding groove 232, and the buffer structure 231 is cylindrical and is mounted in the embedding groove 232 with a portion of the buffer structure 231 located outside the embedding groove 232. The embedding groove 232 is used to mount and limit the buffer structure 231, ensuring stable mounting of the buffer structure 231 on the first face 2211. A portion of the buffer structure 231 is located outside the embedding groove 232, meaning that a portion of the buffer structure 231 protrudes from the embedding groove 232 beyond the first face 2211, or it can be understood that in a direction perpendicular to the first face 2211, the dimension of the buffer structure 231 is larger than that of the embedding groove 232. In this configuration, the embedding groove 232 is provided to allow a portion of the buffer structure 231 to be located inside the limiting end 221, saving space. Since the buffer structure 231 is cylindrical, it is only necessary to ensure that the dimension of the opening of the embedding groove 232 in the radial direction of the buffer structure 231 is smaller than the diameter of the buffer structure 231. The opening of the embedding groove 232 is used to limit the buffer structure 231, ensuring stable mounting of the buffer structure 231 in the embedding groove 232, while a portion of the buffer structure 231 may protrude from the opening of the embedding groove 232, so that a portion of the buffer structure 231 is located outside the embedding groove 232. Optionally, the embedding groove 232 may be prismatic, cylindrical, or any other shape, and in the radial direction of the buffer structure 231, the dimension of the opening of the embedding groove 232 is smaller than the diameter of the buffer structure 231. By way of example, the embedding groove 232 is cylindrical, matching the shape of the buffer structure 231, so that a portion of the outer surface of the buffer structure 231 can closely fit the inner surface of the embedding groove 232, improving the mounting stability of the buffer structure 231.

In a possible design, as shown in FIG. 10 to FIG. 12, a plurality of limiting ends 221 are provided, and the plurality of limiting ends 221 are spaced apart in a direction perpendicular to the transmission direction. The direction perpendicular to the transmission direction may specifically be a direction perpendicular to the transmission direction in the horizontal plane, a direction perpendicular to the transmission direction in the vertical plane, or a direction perpendicular to the transmission direction in any other plane. In this configuration, a plurality of limiting ends 221 are provided to block the material 11 in the conveying zone 101 and increase the contact area between the material 11 and the blocking member 220, thereby improving the stability of the blocking member 220 in blocking the material 11.

In some optional embodiments, the transmission direction is horizontal, and the plurality of limiting ends 221 are spaced apart in the vertical direction. By way of example, two limiting ends 221 are provided, and the two limiting ends 221 are spaced apart in the vertical direction. The lower limiting end 221 is configured to abut against the bottom of the material 11, and the higher limiting end 221 is configured to abut against the top of the material 11. With such an configuration, the two limiting ends 221 can abut against the top and bottom ends of the material 11, effectively preventing the material 11 from tipping over after contacting the limiting end 221, and the reliability of the blocking member 220 in blocking the material 11 is high. If the material 11 has a large dimension in the vertical direction, in this case, since a plurality of limiting ends 221 are spaced apart in the vertical direction, taking two limiting ends 221 as an example, one of the limiting ends 221 abuts against a bottom of the material 11 and the other limiting end 221 abuts against a middle portion of the material 11. In this way, it is also possible to effectively prevent the material 11 from tipping over after contacting the limiting end 221, such that the blocking member 220 provides relatively good stability in blocking the material 11.

In a possible design, the blocking mechanism 200 further includes a blocking mounting base 201, one of the blocking mounting base 201 and the blocking member 220 is provided with a second slide rail 202, the other is provided with a second slide block 203, and the second slide block 203 is slidably mounted on the second slide rail 202. The blocking mounting base 201 is configured to mount the second slide block 203 or the second slide rail 202, and the blocking mounting base 201 may be a plate-shaped structure, a block-shaped structure, or other irregularshaped structures. The second slide block 203 is slidably mounted on the second slide rail 202, so that the blocking member 220 is slidably mounted on the blocking mounting base 201. The blocking mounting base 201 may be fixedly connected to the conveying mechanism 100, or the blocking mounting base 201 may be fixedly connected to a surface (for example, the ground or a workbench) on which the conveying apparatus 10 is mounted, providing stable support for the blocking member 220 through the blocking mounting base 201. When the blocking member 220 slides relative to the blocking mounting base 201, the blocking member 220 can move relative to the conveying zone 101. The second slide rail 202 is configured to support the second slide block 203, and the second slide rail 202 is specifically a strip-shaped structure, with the extension direction of the second slide rail 202 being parallel to the direction toward or away from the conveying zone 101. The second slide block 203 is slidably mounted on the second slide rail 202, specifically, the second slide block 203 has a slide groove, and a portion of the structure of the second slide rail 202 is inserted into the slide groove, allowing the second slide block 203 to slide along the extension direction of the second slide rail 202, thereby enabling the blocking member 220 to move toward or away from the conveying zone 101 relative to the blocking mounting base 201. In this configuration, the second slide block 203 and the second slide rail 202 are provided to enable the movement of the blocking member 220 relative to the blocking mounting base 201 to be smoother, thereby improving the smoothness of movement of the blocking member 220 toward or away from the conveying zone 101. In some optional embodiments, the second slide rail 202 is provided on the blocking mounting base 201, and the second slide block 203 is provided on the blocking member 220.

In a possible design, the blocking mechanism 200 further includes a third plate 204 and a fourth plate 205, the third plate 204 is connected to the fourth plate 205 at an inclined angle, the blocking actuator 210 is mounted within a space defined by the third plate 204 and the fourth plate 205, the blocking actuator 210 is in transmission connection with the third plate 204, and the limiting end 221 is connected to the fourth plate 205.

The third plate 204 and the fourth plate 205 are inclined relative to each other, meaning that the third plate 204 and the fourth plate 205 form an angle greater than 0 degrees and less than 180 degrees, and the third plate 204 and the fourth plate 205 are connected to each other. The third plate 204 and the fourth plate 205 may be connected by any connection method, such as gluing, welding, snapping, or using an auxiliary connecting member 390 (for example, a screw or bolt), or the third plate 204 and the fourth plate 205 may be connected by integral injection molding or integral casting. Optionally, the third plate 204 and the fourth plate 205 are perpendicularly arranged and connected to each other, with the third plate 204 arranged parallel to the vertical direction and the fourth plate 205 arranged parallel to the horizontal direction.

The blocking actuator 210 is mounted within the space defined by the third plate 204 and the fourth plate 205, meaning that since the third plate 204 and the fourth plate 205 are inclined relative to each other, a space is enclosed between the third plate 204 and the fourth plate 205, and the blocking actuator 210 is located within this space. Alternatively, it can be understood that the third plate 204 and the fourth plate 205 are respectively located on different sides of the blocking actuator 210. Optionally, the blocking actuator 210 may be mounted on the blocking mounting base 201, and the blocking actuator 210 is supported within the space defined by the third plate 204 and the fourth plate 205 through the blocking mounting base 201.

The blocking actuator 210 is in transmission connection with the third plate 204, meaning that the blocking actuator 210 can drive the third plate 204 to move. By way of example, the blocking actuator 210 has a driving end, and the third plate 204 is connected to the driving end of the blocking actuator 210, meaning that the driving end of the blocking actuator 210 is fixedly connected to the third plate 204. The driving end of the blocking actuator 210 can drive the third plate 204 to move, thereby driving the fourth plate 205 and the limiting end 221 connected to the fourth plate 205 to move. The third plate 204 and the driving end of the blocking actuator 210 may be connected by any connection method, such as gluing, snapping, welding, or using an auxiliary connecting member 390 (for example, a screw or bolt), which is not limited here.

The limiting end 221 is connected to the fourth plate 205, specifically, the limiting end 221 may be connected by a connecting method such as gluing, welding, snapping, or using an auxiliary connecting member 390 (for example, a screw or bolt), or the fourth plate 205 and the limiting end 221 are connected by integral injection molding or integral casting.

In this configuration, the blocking actuator 210 is mounted within the space defined by the third plate 204 and the fourth plate 205, so that the third plate 204 and the fourth plate 205 provide good protection to the blocking actuator 210.

In some optional embodiments, the fourth plate 205 is connected to the limiting end 221 of the blocking member 220, the third plate 204 is located below the fourth plate 205, and the third plate 204 is located on a side of the fourth plate 205 away from the conveying mechanism 100. The blocking actuator 210 is located below the fourth plate 205 and between the third plate 204 and the conveying mechanism 100. Optionally, the blocking actuator 210 may be mounted on the conveying mechanism 100, and the driving end of the blocking actuator 210 is connected to the third plate 204. The driving end of the blocking actuator 210 drives the third plate 204 to move toward or away from the conveying mechanism 100, thereby driving the fourth plate 205 and the limiting end 221 connected to the fourth plate 205 to move toward or away from the conveying zone 101. When the limiting end 221 moves away from the conveying zone 101 under the drive of the blocking actuator 210, at least a portion of the limiting end 221 may be located above the blocking actuator 210. With this configuration, in the embodiments, mounting the blocking actuator 210 between the third plate 204 and the conveying mechanism 100 may reduce the space occupied by the conveying apparatus 10 in the movement direction of the blocking member 220.

In some optional embodiments, the limiting end 221 is located on the side of the fourth plate 205 facing the conveying zone 101, facilitating the blocking actuator 210 to drive the limiting end 221 to extend into the conveying zone 101. The limiting end 221 is connected to the fourth plate 205 by integral forming, which may be integral injection molding or integral casting, depending on the materials of the limiting end 221 and the fourth plate 205. For example, when both the limiting end 221 and the fourth plate 205 include plastic material, the limiting end 221 and the fourth plate 205 may be connected by integral injection molding. Optionally, the second slide block 203 is specifically arranged on the side of the fourth plate 205 and the limiting end 221 facing the blocking mounting base 201, and the integral structure formed by the fourth plate 205 and the limiting end 221 is connected to the second slide block 203 by a screw.

In some optional embodiments, the blocking actuator 210 may include any driving structure such as a motor, pneumatic cylinder, or hydraulic cylinder. The blocking actuator 210 drives the limiting end 221 to move between the first position and the second position, meaning that the blocking actuator 210 drives the limiting end 221 to extend into or move away from the conveying zone 101. The blocking actuator 210 is connected to a first-blocking-in-position sensor 211 and a second-blocking-in-position sensor 212. When the blocking actuator 210 drives the limiting end 221 to move to the first position, the first-blocking-in-position sensor 211 is triggered; and when the blocking actuator 210 drives the limiting end 221 to move to the second position, the second-blocking-in-position sensor 212 is triggered. The provision of the first-blocking-in-position sensor 211 and the second-blocking-in-position sensor 212 facilitates the closed-loop control of the blocking actuator 210. The first-blocking-in-position sensor 211 and the second-blocking-in-position sensor 212 may both be magnetic position sensors.

In a possible design, the conveying apparatus 10 further includes a second sensor 600, where the second sensor 600 is located behind the blocking member 220 in the transmission direction, the second sensor 600 is arranged at a distance from the blocking member 220, and the second sensor 600 is configured to detect whether material 11 is present in the conveying zone 101 opposite the second sensor 600. The second sensor 600 may specifically be a photoelectric sensor, an acoustic sensor, a laser sensor, or an infrared sensor, which is not limited here.

Optionally, the spacing between the second sensor 600 and the blocking member 220 is the size of 4 to 8 pieces of material 11 (this size being the dimension of the material 11 in the transmission direction), meaning that 5 to 8 pieces of material 11 can be accommodated between the blocking member 220 and the second sensor 600. By way of example, as shown in FIG. 1, the spacing between the second sensor 600 and the blocking member 220 is the size of 5 pieces of material 11, meaning that when there are only five pieces of material 11 behind the blocking member 220, the second sensor 600 detects that no material 11 is present in the conveying zone 101 opposite it.

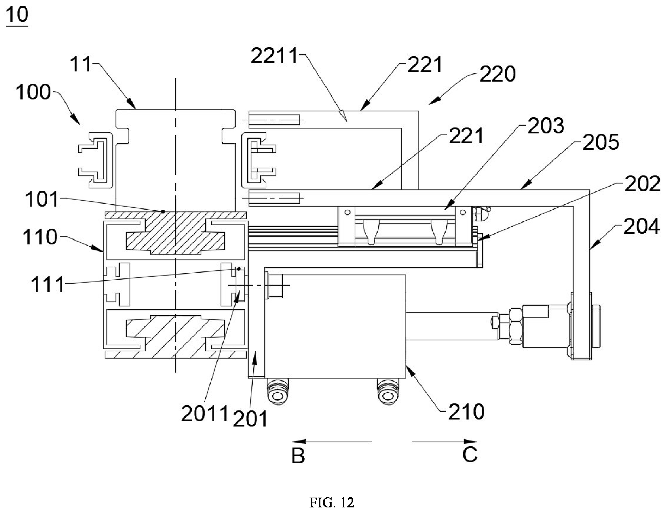

In this configuration, since the second sensor 600 is provided behind the blocking member 220, it can be detected whether material 11 is present at a distance from the blocking member 220, facilitating the determination of whether to block or allow the material 11 to pass. By way of example, a plurality of conveying apparatuses 10 are all electrically connected to a same controller. Specifically, the controller is in signal connection with the blocking actuator 210 and the second sensor 600 in each conveying apparatus 10. When two or more conveying apparatuses 10 have their second sensors 600 detect the presence of material 11 in their respective conveying zones 101, the controller can adjust the operation of the blocking actuator 210 in each conveying apparatus 10 based on the information fed back by the second sensors 600 of the conveying apparatuses 10. For example, as shown in FIG. 3 and FIG. 12, the controller controls the blocking actuator 210 of one conveying apparatus 10 to drive the corresponding limiting end 221 to move to the second position, allowing the material 11 in the conveying zone 101 of this conveying apparatus 10 to move forward smoothly along the transmission direction. The controller controls the blocking actuators 210 in the other conveying apparatuses 10 to drive their corresponding limiting ends 221 to move to the first position, as shown in FIG. 2 and FIG. 11, temporarily blocking the material 11 in the conveying zones 101 of the other conveying apparatuses 10 with the limiting ends 221. This facilitates the orderly transport of material 11 in each conveying apparatus 10.

In some optional embodiments, the second sensor 600 includes a second emitting end and a second receiving end. The second emitting end and the second receiving end are spaced apart in a direction perpendicular to the transmission direction, and the second emitting end and the second receiving end are respectively located on opposite sides of the conveying zone 101. The second emitting end is configured to emit a signal to the second receiving end, and the signal emitted by the second emitting end may be an optical signal or an acoustic signal. When material 11 passes through the conveying zone 101 corresponding to the second emitting end and the second receiving end, the material 11 blocks the signal emitted by the second emitting end to the second receiving end, allowing determination of whether material 11 is present in the conveying zone 101.

In a possible design, the conveying mechanism 100 includes a frame 110, the conveying zone 101 is located on the frame 110, and the blocking mechanism 200 and the damping mechanism 300 are respectively mounted on the frame 110. The frame 110 may be a framework structure, meaning that the frame 110 is assembled from a plurality of support rods connected via lap joints. Alternatively, the frame 110 may be a base structure, with the frame 110 having a plurality of mounting platforms for mounting the blocking mechanism 200 and the damping mechanism 300. In this configuration, the provision of the frame 110 facilitates the mounting of the blocking mechanism 200 and the damping mechanism 300.

In a possible design, the blocking mechanism 200 and/or the damping mechanism 300 is mounted on the side of the frame 110. The frame 110 has a top surface and a bottom surface spaced apart in the vertical direction, and the top surface and the bottom surface of the frame 110 are connected by the side of the frame 110. At least one of the blocking mechanisms 200 is mounted on the side of the frame 110. In this configuration, with at least one of the blocking mechanism 200 and the damping mechanism 300 mounted on the side of the frame 110, the space occupied by the conveying apparatus 10 provided in the embodiments of the present application in the vertical direction can be reduced.

By way of example, as shown in FIG. 11 and FIG. 12, the blocking mounting base 201 is connected to the side of the frame 110, the blocking member 220 is located above the blocking mounting base 201, the side of the blocking mounting base 201 facing the blocking member 220 is provided with the second slide rail 202, the side of the blocking member 220 facing the blocking mounting base 201 is provided with the second slide block 203, and the second slide rail 202 is slidably fitted with the second slide block 203 to mount the blocking member 220 above the blocking mounting base 201, so that the blocking member 220 is located above the frame 110, enabling the limiting end 221 of the blocking member 220 to smoothly extend into the conveying zone 101. Optionally, the blocking mounting base 201 is an "L" shaped plate, the blocking mounting base 201 includes a first connecting plate and a second connecting plate, the first connecting plate is used to connect to the frame 110, the first connecting plate is perpendicular to the second connecting plate, the second connecting plate is connected to the top of the first connecting plate, the second slide rail 202 is provided on the upper surface of the second connecting plate, and the second slide block 203 is arranged on the lower surfaces of the fourth plate 205 and the limiting end 221 of the blocking member 220. Optionally, the blocking actuator 210 is mounted on the blocking mounting base 201. A portion of the structure of the blocking mounting base 201 is located within the space defined by the third plate 204 and the fourth plate 205. Specifically, the fourth plate 205 is located above the second connecting plate, the fourth plate 205 is connected to the limiting end 221 of the blocking member 220, the third plate 204 is located on the side of the second connecting plate away from the first connecting plate, the third plate 204, the second connecting plate, and the first connecting plate enclose an accommodating zone below the fourth plate 205, the blocking actuator 210 is located in the accommodating zone, the driving end of the blocking actuator 210 is connected to the third plate 204, and the side of the blocking actuator 210 away from the driving end is connected to the first connecting plate.

By way of example, as shown in FIG. 7 and FIG. 8, the damping mounting base 301 is connected to the side of the frame 110, a portion of the structure of the damping mounting base 301 is located within the space defined by the first plate 331 and the second plate 332. Specifically, the damping mounting base 301 is located below the second plate 332 and between the first plate 331 and the frame 110. The damping mounting base 301 is an "L" shaped plate, the damping mounting base 301 includes a third connecting plate and a fourth connecting plate, the third connecting plate is used to connect to the frame 110, the fourth connecting plate is perpendicular to the third connecting plate, and the fourth connecting plate is connected to the top of the third connecting plate. The second plate 332 is located above the fourth connecting plate, the first slide block 303 is mounted below the second plate 332, the first slide rail 302 is mounted above the fourth connecting plate, and the first slide block 303 is slidably mounted on the first slide rail 302. The damping actuator 320 is located between the third connecting plate and the first plate 331 and below the fourth connecting plate, the damping actuator 320 is mounted on the third connecting plate, and an end of the damping actuator 320 away from the third connecting plate is connected to the first plate 331. When the damping actuator 320 includes a pneumatic cylinder, the cylinder body of the damping actuator 320 is mounted on the third connecting plate, and an end of the rod body away from the cylinder body is connected to the first plate 331.

In a possible design, the frame 110 is provided with a first trough 111, and the blocking mechanism 200 is mounted at the first trough 111; and/or, the frame 110 is provided with a second trough 112, and the damping mechanism 300 is mounted at the second trough 112. The frame 110 being provided with a first trough 111 may specifically mean that the first trough 111 is provided on the top surface or bottom surface of the frame 110, or the first trough 111 is provided on the side of the frame 110. The blocking mechanism 200 is mounted at the first trough 111, meaning that a portion of the structure of the blocking mechanism 200 is located within the first trough 111. The frame 110 being provided with a second trough 112 may specifically mean that the second trough 112 is provided on the top surface or bottom surface of the frame 110, or the second trough 112 is provided on the side of the frame 110. The damping mechanism 300 is mounted at the second trough 112, meaning that a portion of the structure of the damping mechanism 300 is located within the second trough 112. In this configuration, the inner wall of the first trough 111 limits the blocking mechanism 200, and the inner wall of the second trough 112 limits the damping mechanism 300, facilitating stable mounting of the blocking mechanism 200 and the damping mechanism 300 on the frame 110.

Optionally, the side of the frame 110 is simultaneously provided with the first trough 111 and the second trough 112. The second trough 112 is located behind the first trough 111 in the transmission direction, a portion of the structure of the blocking mechanism 200 is located within the first trough 111, and a portion of the structure of the damping mechanism 300 is located within the second trough 112. When a plurality of damping mechanisms 300 are provided, a plurality of second troughs 112 are also provided, and the plurality of damping mechanisms 300 correspond one-to-one with the multiple second troughs 112.

Optionally, the materials used for the frame 110 include profiled materials, such as aluminum, steel, or stainless steel. The side of the profiled material is provided with a strip-shaped groove extending along the transmission direction, and the first trough 111 and the second trough 112 are respectively troughs of the strip-shaped groove at different positions along the transmission direction. The blocking mechanism 200 and the damping mechanism 300 are both mounted in the strip-shaped groove. In the strip-shaped groove, the trough in the region with the blocking mechanism 200 mounted is the first trough 111, and the trough in the region with the damping mechanism 300 mounted is the second trough 112. The damping mechanism 300 is mounted behind the blocking mechanism 200 in the transmission direction, and the damping mechanism 300 is arranged at a distance from the blocking mechanism 200. When a plurality of damping mechanisms 300 are provided, the plurality of damping mechanisms 300 are all mounted behind the blocking mechanism 200 in the transmission direction, and the plurality of damping mechanisms 300 are spaced apart in the transmission direction. Since the strip-shaped groove extends along the transmission direction, the mounting positions of the blocking mechanism 200 or the damping mechanisms 300 can be adjusted along the transmission direction as needed, thereby providing greater adaptability.

Optionally, the blocking mechanism 200 includes a first limiting portion 2011, one end of the first limiting portion 2011 is connected to the first connecting plate of the blocking mounting base 201, and the other end extends into the first trough 111. The first limiting portion 2011 is limited through the inner wall of the first trough 111, ensuring stable mounting of the blocking mounting base 201 on the frame 110, thereby ensuring stable mounting of the blocking mechanism 200 on the frame 110. Optionally, the damping mechanism 300 includes a second limiting portion 3011, one end of the second limiting portion 3011 is connected to the third connecting plate of the damping mounting base 301, and the other end extends into the second trough 112. The second limiting portion 3011 is limited through the inner wall of the second trough 112, ensuring stable mounting of the damping mounting base 301 on the frame 110, thereby ensuring stable mounting of the damping mechanism 300 on the frame 110.

In a specific embodiment, the embodiment of the present application provides a conveying apparatus 10, the conveying apparatus 10 including a conveying mechanism 100, a blocking mechanism 200, and a damping mechanism 300. The conveying mechanism 100 includes a frame 110, where the frame 110 has a top surface and a bottom surface spaced apart in the vertical direction, and the top surface and the bottom surface of the frame 110 are connected by the side of the frame 110. The conveying mechanism 100 has a conveying zone 101, the conveying zone 101 being specifically located on the top surface of the frame 110. The conveying zone 101 is provided with a flexible chain plate, the materials 11 are placed on the flexible chain plate, and the flexible chain plate moves to drive the materials 11 to move. The side of the frame 110 is provided with a first trough 111 and second troughs 112, with two second troughs 112 provided, and the two second troughs 112 are spaced apart and both located behind the first trough 111 in the transmission direction. The blocking mechanism 200 is mounted at the first trough 111, two damping mechanisms 300 are provided, and each damping mechanism 300 is respectively mounted at a different second trough 112.

The damping mechanism 300 includes a damping mounting base 301, a damping actuator 320, a damping portion 310, a connecting base 330, a base 340, a pressure member 350, an adjusting member 380, a connecting member 390, a scale structure 381, an angular contact bearing set 360, and a rod 370. The damping mounting base 301 is mounted on the side of the frame 110, the damping mounting base 301 includes a third connecting plate and a fourth connecting plate, the third connecting plate and the fourth connecting plate are perpendicularly arranged, with the fourth connecting plate located at the top of the third connecting plate, positioned on the side of the third connecting plate away from the frame 110 and connected to the third connecting plate. The third connecting plate is connected to a second limiting portion 3011, one end of the second limiting portion 3011 protrudes from the side of the third connecting plate facing the frame 110, and the protruding end of the second limiting portion 3011 is partially located within the corresponding second trough 112. The connecting base 330 includes a first plate 331 and a second plate 332, the first plate 331 is connected to the end of the second plate 332 away from the conveying zone 101, and the top end of the first plate 331 is connected to the second plate 332. The space formed between the first plate 331 and the second plate 332 is located on the side of the first plate 331 close to the conveying zone 101 and below the second plate 332. The second plate 332 is located above the fourth connecting plate, the first slide block 303 is mounted below the second plate 332, the first slide rail 302 is mounted above the fourth connecting plate, and the first slide block 303 is slidably mounted on the first slide rail 302. The second plate 332 is provided with a liquid injection hole 3321, the liquid injection hole 3321 being arranged opposite the first slide block 303. The liquid injection hole 3321 is a through hole penetrating the second plate 332 in the thickness direction of the second plate 332. The damping actuator 320 is located between the third connecting plate and the first plate 331 and below the fourth connecting plate. The damping actuator 320 is mounted on the third connecting plate, and the end of the damping actuator 320 away from the third connecting plate is connected to the first plate 331. The damping actuator 320 includes a pneumatic cylinder. The pneumatic cylinder includes a cylinder body and a rod body, the cylinder body is mounted on the third connecting plate, and the end of the rod body away from the cylinder body is connected to the first plate 331. The base 340 is connected to the upper side of the second plate 332, the base 340 has an accommodating space 341, the angular contact bearing set 360 is mounted in the accommodating space 341, and the angular contact bearing set 360 includes a pair of angular contact bearings arranged symmetrically in the axial direction. The angular contact bearing includes an inner ring and an outer ring, and the contact surface between the inner ring and the outer ring is inclined relative to the angular contact bearing, meaning that the inner ring and the outer ring are arranged at an angle. One end of the rod 370 is provided with a limiting member, and the other end is provided with an adjusting member 380. The inner ring is sleeved on the rod 370, the connecting member 390 and the limiting member are respectively located on opposite sides of the inner ring to limit the inner ring of the angular contact bearing between the connecting member 390 and the limiting member, and the outer ring is connected to the inner wall of the base 340. The damping portion 310 includes a plurality of teeth, the plurality of teeth are spaced apart in a circumferential direction, and the region between adjacent teeth can accommodate one material 11. The middle of the damping portion 310 is provided with a through hole 311, one end of the rod 370 passes through the through hole 311, and the end of the rod 370 extending to the side of the damping portion 310 away from the angular contact bearing set 360 is provided with external threads. The adjusting member 380 includes an annular portion and a handle portion, the handle portion is mounted on the outer side of the annular portion to facilitate rotation of the annular portion by an operator, the annular portion is provided with a threaded hole matching the rod 370, and the adjusting member 380 is threadedly engaged with the rod 370. The scale structure 381 is provided with scale lines 3811, one end of the scale structure 381 is in contact with the adjusting member 380, the other end extends into the through hole 311, and the scale structure 381 can move relative to the rod 370 under the drive of the adjusting member 380. The pressure member 350 includes an elastic member 351, the scale structure 381 has an accommodating cavity 3812, the accommodating cavity 3812 of the scale structure 381 communicates with the through hole 311, the scale structure 381 covers the top of the through hole 311, the connecting member 390 covers the bottom of the through hole 311, and the elastic member 351 is a spring. The spring is sleeved on the rod 370, a portion of the spring is located within the through hole 311, and a portion of the spring is located within the accommodating cavity 3812. In the vertical direction, the top surface of the connecting member 390 is in contact with the spring, the top end of the connecting member 390 is connected to the damping portion 310, and the bottom surface of the connecting member 390 is in contact with the top surface of the inner ring of the angular contact bearing in the angular contact bearing set 360 close to the connecting member 390. A limiting body is provided in the region of the rod 370 on a side of the angular contact bearing set 360 away from the connecting member 390, and the limiting body is in contact with the bottom surface of the inner ring of an angular contact bearing in the angular contact bearing set 360 away from the connecting member 390. The connecting member 390 and the limiting body perform limiting fixation of the angular contact bearing set 360 and the rod 370. The conveying apparatus 10 further includes a counting sensor 500, the counting sensor 500 including a detection end 510, the detection end 510 is a proximity switch, the detection end 510 is provided below the damping portion 310, the damping portion 310 is provided with a triggering structure 312, the triggering structure 312 is a screw, and the screw is mounted on the lower surface of the teeth of the damping portion 310. The conveying apparatus 10 further includes a first sensor 400, the first sensor 400 being mounted on the frame 110, where the first sensor 400 is located behind the damping portion 310 in the transmission direction, the spacing between the first sensor 400 and the damping portion 310 is the size of 4 to 8 pieces of material 11, and the first sensor 400 is configured to detect whether material 11 is present in the conveying zone 101 opposite the first sensor 400; under the condition that the first sensor 400 detects that no material 11 is present in the conveying zone 101 opposite the first sensor 400, the damping actuator 320 drives the damping portion 310 to move away from the conveying zone 101.

The blocking mechanism 200 includes a blocking mounting base 201, a blocking actuator 210, a blocking member 220, a first limiting portion 2011, a third plate 204, and a fourth plate 205. The blocking mounting base 201 includes a first connecting plate and a second connecting plate, the first connecting plate and the second connecting plate being perpendicularly arranged, the first connecting plate being located on the side of the second connecting plate closer to the frame 110, and the second connecting plate being connected to the top of the first connecting plate. One end of the first limiting portion 2011 is connected to the first connecting plate of the blocking mounting base 201, and the other end extends into the first trough 111, ensuring stable installation of the blocking mounting base 201 on the frame 110. The third plate 204 and the fourth plate 205 are perpendicularly arranged and connected to each other, the fourth plate 205 is located above the second connecting plate, the fourth plate 205 is connected to the blocking member 220, the third plate 204 is located on the side of the second connecting plate away from the first connecting plate, the third plate 204, the second connecting plate, and the first connecting plate enclose an accommodating zone below the fourth plate 205, the blocking actuator 210 is located in the accommodating zone, the driving end of the blocking actuator 210 is connected to the third plate 204, and the side of the blocking actuator 210 away from the driving end is connected to the first connecting plate. The blocking member 220 includes a limiting end 221, the limiting end 221 is connected to the fourth plate 205, and the limiting end 221 and the fourth plate 205 form an integral structure. The driving end of the blocking actuator 210 drives the third plate 204 to move toward or away from the conveying mechanism 100, thereby driving the fourth plate 205 and the limiting end 221 connected to the fourth plate 205 to move toward or away from the conveying zone 101. The limiting end 221 can have at least a portion of its structure extend into the conveying zone 101 under the drive of the blocking actuator 210 to limit the movement of the material 11 in the conveying zone 101. The number of limiting ends 221 is two, and the two limiting ends 221 are spaced apart in the vertical direction. The limiting end 221 has a first face 2211 and a second face 2212, where the first face 2211 is located behind the second face 2212 in the transmission direction, and the first face 2211 is perpendicular to the transmission direction. The first face 2211 and the second face 2212 are inclined relative to each other, and the distance between the first face 2211 and the second face 2212 gradually increases in a direction away from the conveying zone 101. The first face 2211 is provided with an embedding groove 232, a cylindrical buffer structure 231 is mounted in the embedding groove 232, and in the radial direction of the buffer structure 231, the size of the opening of the embedding groove 232 is smaller than the diameter of the buffer structure 231, with a portion of the buffer structure 231 protruding from the opening of the embedding groove 232. The buffer structure 231 is made of a flexible material, including but not limited to polyurethane, polyether, or polyurethane polyether. The buffer structure 231 provides a buffering effect to the movement of the material 11 behind the limiting end 221, reducing the impact force on the material 11. The embedding groove 232 is cylindrical, matching the shape of the buffer structure 231. The top surface of the second connecting plate is provided with a second slide rail 202, the bottom surface of the fourth plate 205 and the limiting end 221 is provided with a second slide block 203, and the extension direction of the second slide rail 202 is parallel to the direction toward or away from the conveying zone 101. The second slide block 203 is slidably mounted on the second slide rail 202. The conveying apparatus 10 further includes a second sensor 600, the second sensor 600 being mounted on the frame 110, where the second sensor 600 is located behind the blocking member 220 in the transmission direction, the second sensor 600 is arranged at a distance from the blocking member 220, and the spacing between the second sensor 600 and the blocking member 220 is the size of 4 to 8 pieces of material 11.

According to a second aspect, a battery production line is provided, including the conveying apparatus 10 provided in any of the above embodiments. Since the battery production line includes the above conveying apparatus 10, during the process of conveying carrier cups through the conveying apparatus 10, the impact force of the carrier cups on the blocking member 220 in the conveying apparatus 10 can be reduced, extending the service life of the blocking member 220 and facilitating the reduction of the compressive force between adjacent carrier cups, making it easier to remove several carrier cups from a plurality of carrier cups for inspection or other operations.

The battery production line further includes a first device and a second device, and the conveying apparatus 10 is configured to transport the material 11 from the first device to the second device.

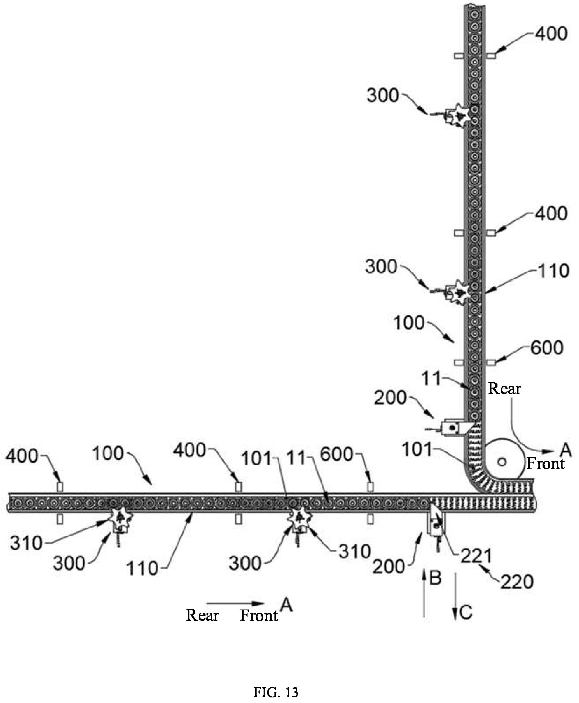

As shown in FIG. 13, in a possible design, a plurality of conveying apparatuses 10 are provided, and the production line further includes a converging apparatus, the converging apparatus including a converging zone, and the conveying zones 101 of the plurality of conveying apparatuses 10 are respectively in communication with the converging zone.

A plurality of conveying apparatuses 10 are provided, the plurality of conveying apparatuses 10 all convey material 11 to the converging apparatus, and the converging apparatus continues to convey the material 11 to the second device.

For example, a plurality of first devices are provided, one second devices is provided, and a conveying apparatus 10 is provided between each first device and the second device, with the number of conveying apparatuses 10 being the same as the number of first devices. The end of each conveying apparatus 10 at the rear in the conveying direction is arranged opposite the corresponding first device, so that the material 11 from the first device enters the conveying apparatus 10. The end of the conveying apparatus 10 at the front in the conveying direction is connected to the converging apparatus, so that the material 11 in the conveying apparatus 10 can move to the converging apparatus, and the converging apparatus is arranged opposite the second device, so that the material 11 in the converging apparatus can move to the second device.

Since the plurality of conveying apparatuses 10 are each provided with a blocking mechanism 200 and a damping mechanism 300, it is convenient to convey material 11 to the converging apparatus through the multiple conveying apparatuses 10.

In some embodiments, the battery production line includes a controller. By way of example, as shown in FIG. 13, two conveying apparatuses 10 are provided. In the two conveying apparatuses 10, the blocking actuator 210 of the blocking mechanism 200, the damping actuator 320 of the damping mechanism 300, the counting sensor 500, the first sensor 400, the second sensor 600, and the converging apparatus are all electrically connected to a controller. When the converging apparatus has a material loading demand, the first sensor 400 can determine which conveying apparatus 10 has material 11 behind the blocking member 220. When one conveying apparatus 10 has material 11 and another does not, the blocking actuator 210 in the conveying apparatus 10 with material 11 is activated, moving the blocking member 220 out of the conveying zone 101, allowing the material 11 in this conveying apparatus 10 to convey material 11 to the converging apparatus. When both conveying apparatuses 10 have material 11 behind their blocking members 220, the blocking actuator 210 in the first conveying apparatus 10 is activated according to a preset sequence, moving the blocking member 220 out of the conveying zone 101, allowing the material 11 in this conveying apparatus 10 to convey a predetermined number of materials 11 to the converging apparatus. When the controller determines, based on the counting sensor 500 in the conveying apparatus 10 conveying material 11, that the number of conveyed materials 11 has reached the predetermined number, the controller controls the blocking actuator 210 in this conveying apparatus 10 to move to the conveying zone 101, stopping the material 11 conveying operation of this conveying apparatus 10. Then, the controller activates the blocking actuator 210 in the other conveying apparatus 10, moving the blocking member 220 out of the conveying zone 101, allowing the material 11 in this conveying apparatus 10 to convey a predetermined number of materials 11 to the converging apparatus, and so on, until the converging apparatus indicates no further material loading demand.

The controller may include a PLC.

Finally, it should be noted that the above embodiments are only used to illustrate the technical solutions of the present application and not to limit them. Although the present application has been described in detail with reference to the foregoing embodiments, those of ordinary skill in the art should understand that they can still modify the technical solutions described in the foregoing embodiments or make equivalent substitutions for some or all of the technical features. These modifications or substitutions do not cause the essence of the corresponding technical solutions to depart from the scope of the technical solutions of the embodiments of the present application, and they should be included within the scope of the claims and specification of the present application. In particular, as long as there is no structural conflict, the various technical features mentioned in the embodiments can be combined in any manner. The present application is not limited to the specific embodiments disclosed herein but includes all technical solutions falling within the scope of the claims.

## Claims

1. A conveying apparatus comprising:
a conveying mechanism having a conveying zone, wherein the conveying mechanism is configured to convey material in the conveying zone along a transmission direction;
a blocking mechanism configured to extend into the conveying zone to block movement of the material along the transmission direction; and
a damping mechanism, at least partially located in the conveying zone, wherein the damping mechanism is arranged at a distance from the blocking mechanism in the transmission direction, the damping mechanism is capable of moving relative to the conveying mechanism under the drive of the material, and the damping mechanism is configured to provide resistance to the material.

2. The conveying apparatus according to claim 1, wherein the damping mechanism comprises a damping portion and a damping actuator, the damping actuator configured to drive the damping portion to move toward or away from the conveying zone.

3. The conveying apparatus according to claim 2, wherein the conveying apparatus further comprises a first sensor, wherein the first sensor is located behind the damping portion in the transmission direction, arranged at a distance from the damping portion, and configured to detect whether material is present in the conveying zone opposite the first sensor; and under the condition that the first sensor detects that no material is present in the conveying zone opposite the first sensor, the damping actuator drives the damping portion to move away from the conveying zone.

4. The conveying apparatus according to claim 2, wherein the damping mechanism further comprises a connecting base, wherein the connecting base comprises a first plate and a second plate, the first plate is connected to the second plate at an angle, the first plate is connected to the damping actuator, the damping portion is movably mounted on the second plate, and the damping actuator is located within a space defined by the first plate and the second plate.

5. The conveying apparatus according to claim 4, wherein the damping mechanism further comprises a damping mounting base, the damping mounting base is connected to the conveying mechanism, the damping actuator is connected to the damping mounting base, one of the damping mounting base and the second plate is provided with a first slide rail, the other is provided with a first slide block, and the first slide block is slidably mounted on the first slide rail.

6. The conveying apparatus according to any one of claims 1 to 5, wherein a plurality of damping mechanisms are provided, and the damping portions of the multiple damping mechanisms are spaced apart in the transmission direction.

7. The conveying apparatus according to any one of claims 1 to 6, wherein the damping mechanism further comprises a base, a pressure member, an angular contact bearing set, and a rod, wherein an outer ring of the angular contact bearing set is connected to the base, an inner ring of the angular contact bearing set is connected to the rod, the pressure member is located on one axial side of the angular contact bearing set, the pressure member provides pressure to the angular contact bearing set, the damping portion is in transmission connection with the rod, the damping portion is capable of driving the rod to rotate, and the material is capable of pushing the damping portion to rotate.

8. The conveying apparatus according to claim 7, wherein the pressure member comprises an elastic member, and the damping mechanism further comprises an adjusting member, the elastic member being located between the adjusting member and the angular contact bearing set, and the adjusting member being capable of moving relative to the rod to change an amount of compression of the elastic member.

9. The conveying apparatus according to claim 8, wherein the damping portion is provided with a through hole, the rod passes through the through hole, and the angular contact bearing set and the adjusting member are respectively located on opposite sides of the damping portion, wherein the damping mechanism further comprises a connecting member, the connecting member is fixedly connected to the damping portion, the connecting member is in transmission connection with the rod, and the connecting member is capable of driving the rod to rotate.

10. The conveying apparatus according to claim 9, wherein two ends of the connecting member are respectively in contact with the elastic member and the angular contact bearing set.

11. The conveying apparatus according to claim 9, wherein the damping mechanism further comprises a scale structure, the scale structure is provided with scale lines, one end of the scale structure is in contact with the adjusting member, the other end extends into the through hole, and the scale structure is capable of moving relative to the rod under the drive of the adjusting member.

12. The conveying apparatus according to claim 11, wherein the elastic member is a spring, the spring is sleeved on the rod, a portion of the spring is located within the through hole, the scale structure has an accommodating cavity, a portion of the spring is located within the accommodating cavity, and the scale structure is in contact with an end of the spring away from the angular contact bearing set.

13. The conveying apparatus according to claim 8, wherein the rod is provided with external threads, the adjusting member has a threaded hole engaging with the external threads, and the adjusting member is threadedly engaged with the rod through the threaded hole.

14. The conveying apparatus according to any one of claims 1 to 13, wherein the conveying apparatus further comprises a counting sensor, the counting sensor comprises a detection end, the damping portion is provided with a triggering structure, the damping portion moves under the drive of the material to drive the triggering structure to trigger the detection end, and the counting sensor is capable of recording the number of times the detection end is triggered.

15. The conveying apparatus according to claim 5, wherein the second plate is provided with a liquid injection hole, the liquid injection hole being arranged opposite the first slide block.

16. The conveying apparatus according to any one of claims 1 to 15, wherein the blocking mechanism comprises a blocking member and a blocking actuator, the blocking actuator is configured to drive the blocking member to move to extend into the conveying zone, the blocking member comprises a limiting end, wherein the limiting end has a first face and a second face that are arranged in the transmission direction, the first face and the second face are inclined relative to each other, and the distance between the first face and the second face gradually increases in a direction away from the conveying zone.

17. The conveying apparatus according to claim 16, wherein the first face is located behind the second face in the transmission direction, and the first face is perpendicular to the transmission direction.

18. The conveying apparatus according to claim 16, wherein the first face is mounted with a buffer structure.

19. The conveying apparatus according to claim 18, wherein the first face is provided with an embedding groove, the buffer structure is cylindrical, and the buffer structure is mounted in the embedding groove with a portion of the buffer structure located outside the embedding groove.

20. The conveying apparatus according to claim 16, wherein a plurality of limiting ends are provided, and the plurality of limiting ends are spaced apart in a direction perpendicular to the transmission direction.

21. The conveying apparatus according to claim 17, wherein the blocking mechanism further comprises a blocking mounting base, one of the blocking mounting base and the blocking member is provided with a second slide rail, the other is provided with a second slide block, and the second slide block is slidably mounted on the second slide rail.

22. The conveying apparatus according to claim 16, wherein the blocking mechanism further comprises a third plate and a fourth plate, the third plate is connected to the fourth plate at an inclined angle, the blocking actuator is mounted within a space defined by the third plate and the fourth plate, the blocking actuator is in transmission connection with the third plate, and the limiting end is connected to the fourth plate.

23. The conveying apparatus according to any one of claims 1 to 22, wherein the conveying apparatus further comprises a second sensor, the second sensor being located behind the blocking mechanism in the transmission direction, arranged at a distance from the blocking mechanism, and configured to detect whether material is present in the conveying zone opposite the second sensor.

24. The conveying apparatus according to any one of claims 1 to 22, wherein the conveying mechanism comprises a frame, the conveying zone is located on the frame, and the blocking mechanism and the damping mechanism are respectively mounted on the frame.

25. The conveying apparatus according to claim 24, wherein the blocking mechanism and/or the damping mechanism is mounted on the side of the frame.

26. The conveying apparatus according to claim 24, wherein the frame is provided with a first trough, and the blocking mechanism is mounted at the first trough; and/or, the frame is provided with a second trough, and the damping mechanism is mounted at the second trough.

27. A battery production line comprising the conveying apparatus according to any one of claims 1 to 26.

28. The battery production line according to claim 27, wherein a plurality of conveying apparatuses are provided, the production line further comprises a converging apparatus, the converging apparatus comprises a converging zone, and the conveying zones of the plurality of conveying apparatuses are respectively in communication with the converging zone.
